# EUROPEAN PATENT SPECIFICATION

(11) **EP 3 477 759 B1**
(45) Date of publication and mention of the grant of the patent: **07.07.2021**
(21) Application number: 17833822.4
(22) Date of filing: 25.05.2017
(51) Int. Cl.: H01M 10/054, H01M 10/0567, H01M 8/18, H01M 12/08, H01M 4/38, H01M 4/46, H01G 11/30, H01G 11/64, H01G 11/60, H01G 11/62, H01M 10/0568, H01M 10/0569

(54) **ELECTROLYTE SOLUTION AND ELECTROCHEMICAL DEVICE COMPRISING THE SAME**
ELEKTROLYTLÖSUNG UND ELEKTROCHEMISCHE VORRICHTUNG DIESELBE UMFASSEND
SOLUTION ÉLECTROLYTIQUE ET DISPOSITIF ÉLECTROCHIMIQUE LA COMPRENANT

(30) Priority: 26.07.2016 JP 2016146302
(43) Date of publication of application: 01.05.2019
(73) Proprietor: Murata Manufacturing Co., Ltd., Nagaokakyo-shi, Kyoto 617-8555 (JP)
(72) Inventor: MATSUMOTO Ryuhei, Tokyo 108-0075 (JP); NAKAYAMA Yuri, Tokyo 108-0075 (JP); KUBOTA Tadahiko, Tokyo 108-0075 (JP)
(74) Representative: Witte, Weller & Partner Patentanwälte mbB
(86) International application number: PCT/JP2017/019535
(87) International publication number: WO 2018/020811

(56) References cited:
- WO-A1-2016/006299
- WO-A1-2016/085617
- JP-A- 2000 268 861
- JP-A- 2008 244 263
- JP-A- 2008 541 401
- JP-A- 2012 204 185
- JP-A- 2013 057 603
- JP-A- 2014 072 031
- JP-A- 2014 504 423
- KR-A- 20140 071 603
- US-A1- 2005 147 891
- US-A1- 2009 239 113
- TOHRU SHIGA et al.: "Catalytic Cycle Employing a TEMPO Anion Complex to Obtain a Secondary Mg O2 Battery", The Journal of Physical Chemistry Letters, vol. 5, 25 April 2014 (2014-04-25), pages 1648-1652, XP055568936,

## Description

### TECHNICAL FIELD

The present disclosure relates to an electrolytic solution and an electrochemical device.

### BACKGROUND ART

Magnesium used in magnesium batteries is more abundant in resource and much more inexpensive than lithium, is capable of producing a large amount of electricity per unit volume through an oxidation-reduction reaction as compared to lithium, and has high safety when used in batteries. Therefore, magnesium batteries are attracting attention as next-generation secondary batteries to replace lithium-ion batteries. The magnesium batteries, however, have poor cycle characteristics. The cycle characteristics are deteriorated because sulfur or a reduced form of sulfur produced as a battery discharges is diffused to an interface of the magnesium-based material that forms a negative electrode to thereby cause corrosive reaction, so that sulfur is consumed to reduce the sulfur which is an active material in a positive electrode.

In lithium-ion batteries, a technique of suppressing deterioration of cycle characteristics are generally used by mixing several percentages of an additive agent or less in an electrolytic solution to form a film called SEI (Solid Electrolyte Interface) in a positive electrode or a negative electrode (see, for example, K. Xu, Chem. Rev., 2014, 114, 11503-11618). Further, in lithium-sulfur secondary batteries containing sulfur in a positive electrode and lithium in a negative electrode in the same manner as in magnesium-ion secondary batteries, LiNO₃ is often used as an additive agent to an electrolytic solution in order to suppress deterioration of cycles (see, for example, D. Aurbach et. al., J. Electrochem. Soc., 2009, 156, A694-A702).

Patent Document 1 refers to a rechargeable magnesium battery comprising (i) a negative electrode comprising a current collector having an electrodeposited coating of magnesium metal, (ii) a cathode comprising a nitroxyl radical compound like TEMPO as active material, and (iii) an electrolyte system comprising a non-aqueous solvent and a magnesium salt soluble in the non-aqueous solvent.

Patent Documents 2 & 3 disclose electrolytic solutions for electrochemical devices, preferably magnesium-ion batteries, comprising a solvent composed of a sulfone and a magnesium salt dissolved in the solvent.

Non-Patent Document 3 describes a secondary magnesium-oxygen battery employing a TEMPO-anion complex as a catalyst for the decomposition of magnesium oxide, which complex is added to the cathode.

Patent Document 4 refers to an electrochemical cell comprising (i) an anode comprising magnesium as active component, (ii) a cathode stable to a voltage of at least 3.2 V relative to a magnesium reference, and (iii) an electrolyte comprising a solvent and a lithium chloride complex of a magnesium halide salt of a sterically hindered secondary amine like tetramethylpiperidine.

### PRIOR ART DOCUMENTS

### NON PATENT DOCUMENTS

Non-Patent Document 1: K. Xu, Chem. Rev., 2014, 114, 11503-11618
Non-Patent Document 2: D. Aurbach et. al., J. Electrochem. Soc., 2009, 156, A694-A702
Non-Patent Document 3 : T. Shiga et al., The Journal of Physical Chemistry Letters, 2014, 5, 1648-1652

### PATENT DOCUMENTS

Patent Document 1 : WO 2016/085617 A1
Patent Document 2 : JP 2014 072031 A
Patent Document 3 : WO 2016/006299 A1
Patent Document 4 : JP 2014 504423 A

### SUMMARY OF THE INVENTION

### Problem to be solved by the invention

In the magnesium-sulfur secondary batteries, however, the additive to the electrolytic solution intended for improvement of cycle characteristics has not yet been developed.

It is therefore an object of the present disclosure to provide an electrolytic solution to which an additive (additive agent) capable of improving cycle characteristics is added, and an electrochemical device including the electrolytic solution.

### Means for solving the problem

In order to achieve the above object, the electrolytic solution according to a first aspect of the present disclosure is an electrolytic solution for an electrochemical device including a negative electrode including a magnesium-based material, in which a 2,2,6,6-tetramethylpiperidine-1-oxyl free radical [TEMPO, see the following structural formula (1-1)] or a derivative of the 2,2,6,6-tetramethylpiperidine-1-oxyl free radical is added.

Alternatively, the electrolytic solution according to a first aspect of the present disclosure is an electrolytic solution for an electrochemical device including a negative electrode including a magnesium-based material, in which at least one of substances having the following structural formulas is added.

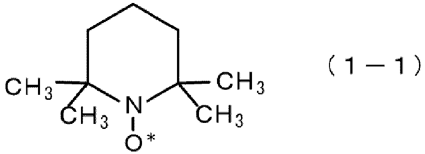

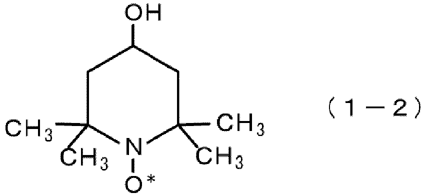

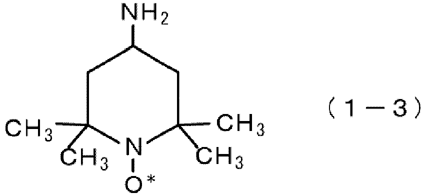

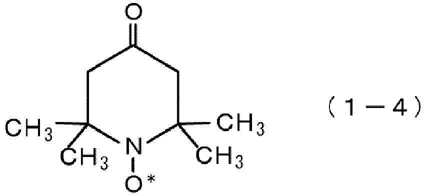

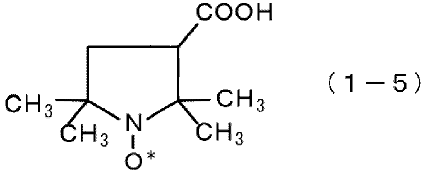

In order to achieve the above object, the electrochemical device according to the second aspect of the present disclosure is an electrochemical device including a negative electrode including a magnesium-based material, in which the electrochemical device includes an electrolytic solution having a 2,2,6,6-tetramethylpiperidine-1-oxyl free radical or a derivative of the 2,2,6,6-tetramethylpiperidine-1-oxyl free radical added to the electrolytic solution.

Alternatively, the electrochemical device according to the second aspect of the present disclosure is an electrochemical device including a negative electrode including a magnesium-based material, in which the electrochemical device includes an electrolytic solution having at least one of substances having the following structural formulas added to the electrolytic solution.

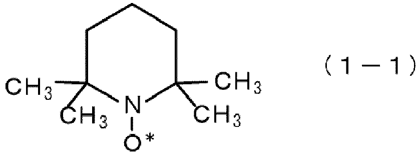

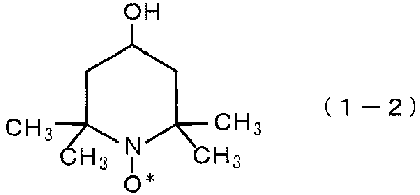

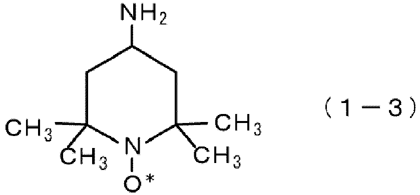

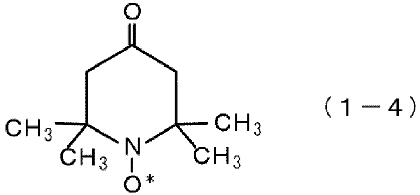

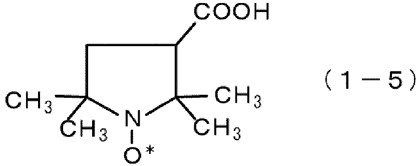

### Advantageous effect of the invention

In the electrolytic solution or the electrochemical device according to the first and second aspects of the present disclosure, a 2,2,6,6-tetramethylpiperidine-1-oxyl free radical or a derivative thereof is added to the electrolytic solution, or at least one of substances having structural formulas (1-1), (1-2), (1-3), (1-4), and (1-5) is added thereto. Therefore, an electrolytic solution and an electrochemical device that exhibit excellent cycle characteristics can be provided. It will be understood that the effects described herein are illustrative only and not intended to be limiting or exclude additional effects.

### BRIEF EXPLANATION OF DRAWINGS

FIG. 1 is a schematic exploded view of an electrochemical device (battery) of Example 1.
FIGS. 2A and 2B are a plot of a relationship between the number of charge/discharge cycles and a discharge capacity retention ratio in a magnesium secondary battery including an electrolytic solution in Examples 1A and 1B.
FIGS. 3A and 3B are a graph illustrating a discharge capacity retention ratio (unit: %) at a fifth cycle of discharge when the discharge capacity retention ratio at a first cycle of discharge is set to 100% in the magnesium secondary battery including an electrolytic solution of Examples 1A and 1B.
FIG. 4 is a schematic cross-sectional view of an electrochemical device (capacitor) of Example 2.
FIG. 5 is a conceptual diagram of an electrochemical device (air battery) of Example 2.
FIG. 6 is a conceptual diagram of an electrochemical device (fuel battery) of Example 2.
FIG. 7 is a conceptual diagram of an electrochemical device (battery) of the present disclosure.
FIG. 8 is a schematic cross-sectional view of a magnesium secondary battery (cylinder type magnesium secondary battery) in Example 3.
FIG. 9 is a schematic cross-sectional view of a magnesium secondary battery (flat plate type laminated film type magnesium secondary battery) in Example 3.
FIG. 10 is a block diagram illustrating a circuit configuration example in Example 3 in a case where the magnesium secondary battery described in Example 1 in the present disclosure is applied to a battery pack.
FIG. 11A is a block diagram illustrating a configuration of an application example (electric vehicle) of the present disclosure in Example 3; FIG. 11B is a block diagram illustrating a configuration of an application example (power storage system) of the present disclosure in Example 3; and FIG. 11C is a block diagram illustrating a configuration of an application example (electric tool) of the present disclosure in Example 3.

### MODE FOR CARRYING OUT THE INVENTION

Hereinafter, the present disclosure will be described on the basis of examples with reference to the drawings. However, the present disclosure is not limited to examples, but various numerical values and materials in examples are illustrative. Incidentally, description will be made in the following order.
1. Description of general features of electrolytic solution and electrochemical device according to the first and second aspects of the present disclosure
2. Example 1 (electrolytic solution and electrochemical device according to the first and second aspects of the present disclosure)
3. Example 2 (modification of Example 1)
4. Example 3 (application example of magnesium secondary battery of Example 1)
5. Others

### <Description of general features of electrolytic solution and electrochemical device according to the first and second aspects of the present disclosure>

In the following description, a 2,2,6,6-tetramethylpiperidine-1-oxyl free radical or a derivative thereof to be added to an electrolytic solution; or a substance having a structural formula (1-1), (1-2), (1-3), (1-4), or (1-5) may be referred to as an "additive (additive agent) of the present disclosure" for convenience.

In the electrolytic solution according to the first and second aspects of the present disclosure, an electrochemical device may be a mode including a positive electrode including a material containing sulfur (S). The electrochemical device according to the first and second aspects of the present disclosure may be a mode including a positive electrode including a material containing sulfur (S) .

The electrolytic solution according to the first and second aspects of the present disclosure or the electrolytic solution in the electrochemical device according to the first and second aspects of the present disclosure including the above preferable mode may include a sulfone and a magnesium salt dissolved in the sulfone. In this case, the magnesium salt may include MgXₙ (where n is 1 or 2, and X is a monovalent or divalent anion). Here, X may include a molecule containing a halogen, -SO₄, -NO₃, or a hexaalkyldisiazide group. Specifically, the molecule containing a halogen (halide) may include MgX₂ (X = Cl, Br, or I), and more specifically may include magnesium chloride (MgCl₂), magnesium bromide (MgBr₂), or magnesium iodide (MgI₂).

Alternatively, the magnesium salt may be at least one magnesium salt selected from the group consisting of magnesium perchlorate (Mg(ClO₄)₂), magnesium nitrate (Mg(NO₃)₂), magnesium sulfate (MgSO₄), magnesium tetrafluoroborate (Mg(BF₄)₂), magnesium tetraphenylborate (Mg(B(C₆H₅)₄)₂, magnesium hexafluorophosphate (Mg(PF₆)₂), magnesium hexafluoroarsenate (Mg(AsF₆)₂), magnesium perfluoroalkylsulfonate ((Mg(R_{f1}SO₃)₂), where R_{f1} is a perfluoroalkyl group), magnesium perfluoroalkylsulfonylimide (Mg((R_{f2}SO₂)₂N)₂, where R_{f2} is a perfluoroalkyl group), and magnesium hexaalkyl disilazide ((Mg(HRDS)₂), where R is an alkyl group). Incidentally, each of the magnesium salts mentioned above from magnesium chloride to (Mg(HRDS)₂) is referred to as "magnesium salt-A" for convenience. In addition, in magnesium salt-A, for example, a molar ratio of a sulfone to the magnesium salt is preferably 4 or more and 35 or less, more preferably 6 or more and 16 or less, and still more preferably 7 or more and 9 or less, but is not limited thereto.

Alternatively, examples of the magnesium salt include magnesium borohydride (Mg(BH₄)₂). As described above, if a magnesium salt used includes magnesium borohydride (Mg(BH₄)₂) and contains no halogen atom, it is unnecessary to manufacture various members constituting the electrochemical device from a material having high corrosion resistance. Incidentally, such an electrolytic solution can be manufactured by dissolving magnesium borohydride in a sulfone. The magnesium salt including magnesium borohydride (Mg(BH₄)₂) is referred to as "magnesium salt-B" for convenience. Such an electrolytic solution according to the first and second aspects of the present disclosure is a magnesium ion-containing nonaqueous electrolytic solution in which magnesium salt-B is dissolved in a solvent including a sulfone. A molar ratio of a sulfone to magnesium salt-B in the electrolytic solution is, for example, 50 or more and 150 or less, typically 60 or more and 120 or less, and preferably 65 or more and 75 or less, but is not limited thereto.

In these configurations, the sulfone may be an alkyl sulfone represented by R₁R₂SO₂ (where R₁ and R₂ each represent an alkyl group) or an alkyl sulfone derivative. The types (carbon numbers and combinations) of R₁ and R₂ are not particularly limited, and selected as necessary. The carbon number of each of R₁ and R₂ is preferably 4 or less, but is not limited thereto. Furthermore, the sum of the number of carbon atoms of R₁ and the number of carbon atoms of R₂ is preferably 4 or more and 7 or less, but is not limited thereto. Examples of R₁ and R₂ include a methyl group, an ethyl group, an n-propyl group, an i-propyl group, an n-butyl group, an i-butyl group, an s-butyl group, and a t-butyl group.

Specific examples of the alkyl sulfone include at least one alkyl sulfone selected from the group consisting of dimethyl sulfone (DMS), methyl ethyl sulfone (MES), methyl-n-propyl sulfone (MnPS), methyl-i-propyl sulfone (MiPS), methyl-n-butyl sulfone (MnBS), methyl-i-butyl sulfone (MiBS), methyl-s-butyl sulfone (MsBS), methyl-t-butyl sulfone (MtBS), ethyl methyl sulfone (EMS), diethyl sulfone (DES), ethyl-n-propyl sulfone (EnPS), ethyl-i-propyl sulfone (EiPS), ethyl-n-butyl sulfone (EnBS), ethyl-i-butyl sulfone (EiBS), ethyl-s-butyl sulfone (EsBS), ethyl-t-butyl sulfone (EtBS), di-n-propyl sulfone (DnPS), di-i-propyl sulfone (DiPS), n-propyl-n-butyl sulfone (nPnBS), n-butyl ethyl sulfone (nBES), i-butyl ethyl sulfone (iBES), s-butyl ethyl sulfone (sBES), and di-n-butyl sulfone (DnBS). Furthermore, examples of the alkyl sulfone derivative include ethyl phenyl sulfone (EPhS). In addition, among these sulfones, at least one selected from the group consisting of EnPS, EiPS, EsBS, and DnPS is preferable.

Further, the electrochemical device according to the first and second aspects of the present disclosure including various preferable modes and configurations described above can be a battery (specifically, a primary battery or a secondary battery) in which an electrolyte layer is constituted by the electrolytic solution according to the first and second aspects of the present disclosure including various preferable modes and configurations described above.

The electrolytic solution according to the first and second aspects of the present disclosure including various preferable modes and configurations described above and the electrolytic solution in the electrochemical device according to the first and second aspects of the present disclosure including various preferable modes and configurations described above are hereinafter collectively referred to as the "electrolytic solution and the like of the present disclosure".

For example, the electrolytic solution and the like of the present disclosure containing magnesium salt-A can be manufactured based on the steps of dissolving magnesium salt-A in a low-boiling-point solvent capable of dissolving magnesium salt-A, then dissolving a sulfone therein, subsequently removing the low-boiling-point solvent from the sulfone solution to obtain an electrolytic solution, and then dissolving the additive of the present disclosure in the electrolytic solution.

As the low-boiling-point solvent capable of dissolving magnesium salt-A, basically, any solvent can be used as long as being a solvent having a boiling point lower than a sulfone selected among solvents capable of dissolving magnesium salt-A, and a solvent is selected as necessary, but an alcohol is preferably used. The alcohol may be a monohydric alcohol or a polyhydric alcohol, and may be a saturated alcohol or an unsaturated alcohol. Specific examples of the alcohol include methanol, ethanol, 1-propanol, 2-propanol (isopropanol), 1-butanol, 2-butanol (sec-butanol), 2-methyl-1-propanol (isobutanol), 2-methyl-2-propanol (tert-butanol), and 1-pentanol, but are not limited thereto. A dehydrated alcohol is preferably used as the alcohol.

Specifically, first, magnesium salt-A is dissolved in an alcohol. As the magnesium salt-A, an anhydrous magnesium salt can be preferably used. Usually, magnesium salt-A is not dissolved in a sulfone, but is dissolved well in an alcohol. In this way, when magnesium salt-A is dissolved in an alcohol, the alcohol is coordinated to magnesium. Subsequently, a sulfone and the additive of the present disclosure is dissolved in the alcohol in which magnesium salt-A is dissolved. Thereafter, the alcohol is removed by heating this solution under reduced pressure. In the process of removing the alcohol in this manner, the alcohol coordinated to magnesium is exchanged (or replaced) with the sulfone. As described above, the electrolytic solution and the like of the present disclosure can be manufactured.

As described above, it is possible to obtain a magnesium ion-containing nonaqueous electrolytic solution which can be used for a magnesium metal and exhibits an electrochemically reversible precipitation and dissolution reaction of magnesium at room temperature using a sulfone which is a non-ether type solvent. In addition, energy density can be improved, and the composition of this electrolytic solution is simple. Therefore, cost of the electrolytic solution itself can be largely reduced.

Alternatively, the electrolytic solution and the like of the present disclosure contains a solvent including a sulfone and a nonpolar solvent, magnesium salt-A dissolved in the solvent, and the additive of the present disclosure.

The nonpolar solvent is selected as necessary, but is preferably a nonaqueous solvent having a dielectric constant and the number of donors of 20 or less. More specifically, examples of the nonpolar solvent include at least one nonpolar solvent selected from the group consisting of an aromatic hydrocarbon, an ether, a ketone, an ester, and a chain carbonate ester. Examples of the aromatic hydrocarbon include toluene, benzene, o-xylene, m-xylene, p-xylene, and 1-methylnaphthalene. Examples of the ether include diethyl ether and tetrahydrofuran. Examples of the ketone include 4-methyl-2-pentanone. Examples of the ester include methyl acetate and ethyl acetate. Examples of the chain carbonate ester include dimethyl carbonate, diethyl carbonate, and ethyl methyl carbonate.

The sulfone, magnesium salt-A, and additive of the present disclosure are as described above. In addition, for example, a molar ratio of a sulfone to magnesium salt-A is more preferably 4 or more and 20 or less, more preferably 6 or more and 16 or less, and still more preferably 7 or more and 9 or less, but is not limited thereto.

For example, the electrolytic solution according to the first and second aspects of the present disclosure containing magnesium salt-A, an additive of the present disclosure, and a nonpolar solvent can be manufactured based on the steps of dissolving magnesium salt-A in a low-boiling-point solvent capable of dissolving magnesium salt-A, then dissolving a sulfone therein, subsequently removing the low-boiling-point solvent from the sulfone solution to obtain an electrolytic solution, then dissolving an additive of the present disclosure to the electrolytic solution, and then mixing a nonpolar solvent with the resultant solution.

Specifically, first, magnesium salt-A is dissolved in an alcohol. As a result, the alcohol is coordinated to magnesium. As the magnesium salt-A, an anhydrous magnesium salt can be preferably used. Subsequently, a sulfone and the additive of the present disclosure are dissolved in the alcohol in which the magnesium salt is dissolved. Thereafter, the alcohol is removed by heating this solution under reduced pressure. In the process of removing the alcohol in this manner, the alcohol coordinated to magnesium is exchanged (or replaced) with the sulfone. Subsequently, a nonpolar solvent is mixed with the solution from which the alcohol has been removed. As described above, the electrolytic solution and the like of the present disclosure can be manufactured.

Other examples of the solvent include ethylene carbonate, propylene carbonate, dimethyl carbonate, diethyl carbonate, ethyl methyl carbonate, methyl propyl carbonate, acetonitrile, dimethoxyethane, diethoxyethane, vinylene carbonate, γ-butyrolactone, and tetrahydrofuran. These solvents can be used singly or in mixture of two or more kinds thereof.

When the electrochemical device (or secondary battery) according to the first and second aspects of the present disclosure is a battery (primary battery or secondary battery) having an electrolyte layer including the electrolytic solution according to the first and second aspects of the present disclosure, examples of the battery include a battery including a negative electrode including a magnesium-based material, specifically, a negative electrode (specifically, a negative electrode active material) including magnesium, a magnesium alloy, or a magnesium compound. More specific examples of the secondary battery include a magnesium battery, an air battery, and a fuel battery.

Furthermore, when the electrochemical device (or secondary battery) according to the first and second aspects of the present disclosure is a battery having an electrolyte layer including the electrolytic solution according to the first and second aspects of the present disclosure, for example, a positive electrode containing sulfur (S), graphite fluoride ((CF)ₙ), oxides and halides of various metals [e.g., scandium (Sc), titanium (Ti), vanadium (V), chromium (Cr), manganese (Mn), iron (Fe), cobalt (Co), nickel (Ni), copper (Cu), zinc (Zn), or molybdenum (Mo)], a sulfide, or a selenide as a positive electrode active material can be used, but the battery is not limited thereto. For example, the positive electrode can have a structure in which a positive electrode active material layer is formed on a surface of a positive electrode current collector. However, the positive electrode may have a structure not including a positive electrode current collector but only including a positive electrode active material layer. For example, the positive electrode current collector includes a metal foil such as an aluminum foil. The positive electrode active material layer may contain at least one of a conductive auxiliary agent and a binder as necessary.

Examples of the conductive auxiliary agent include a carbon material such as graphite, a carbon fiber, carbon black, or a carbon nanotube, and can be used singly or in mixture of two or more kinds thereof. Examples of the carbon fiber include a vapor growth carbon fiber (VGCF). Examples of the carbon black include acetylene black and Ketjen black. Examples of the carbon nanotube include a single wall carbon nanotube (SWCNT) and a multi wall carbon nanotube (MWCNT) such as a double wall carbon nanotube (DWCNT). A material other than the carbon material can be used as long as the material has excellent conductivity. For example, a metallic material such as Ni powder or a conductive polymer material can be used. Examples of the binder include a fluorine-based resin such as polyvinylidene fluoride (PVdF) or polytetrafluoroethylene (PTFE), and a polymer resin such as a polyvinyl alcohol (PVA) resin or a styrene-butadiene copolymer rubber (SBR) resin. Furthermore, a conductive polymer may be used as the binder. Examples of the conductive polymer include substituted or unsubstituted polyaniline, polypyrrole, polythiophene, and a (co)polymer including one or two kinds selected therefrom.

Examples of a material constituting a negative electrode (specifically, a negative electrode active material) include a magnesium metal simple substance, a magnesium alloy, and a magnesium compound as described above. For example, the negative electrode is manufactured from a plate-like material or a foil-like material, but is not limited thereto, and can be formed (shaped) using powder. In some cases, the negative electrode can be manufactured by an electrolytic plating method using an electrolytic solution containing a sulfone and a magnesium salt (composition of the electrolytic solution according to the first and second aspects of the present disclosure except the additive of the present disclosure). Examples of a material constituting a current collector in the negative electrode include a metal foil such as a copper foil, a nickel foil, or a stainless-steel foil.

Alternatively, the negative electrode can have a structure in which a negative electrode active material layer is formed in the vicinity of a surface thereof. Examples of the negative electrode active material layer include a layer having magnesium ion conductivity, containing at least magnesium (Mg), carbon (C), oxygen (O), sulfur (S), and halogen. Such a negative electrode active material layer preferably has a single peak derived from magnesium in a range of 40 eV or more and 60 eV or less. Examples of the halogen include at least one selected from the group consisting of fluorine (F), chlorine (Cl), bromine (Br), and iodine (I). In addition, in this case, the negative electrode active material layer more preferably has a single peak derived from magnesium in a range of 40 eV or more and 60 eV or less from a surface of the negative electrode active material layer to the depth of 2 × 10⁻⁷ m. This is because the negative electrode active material layer exhibits good electrochemical activity from the surface thereof to the inside thereof. Furthermore, for a similar reason, an oxidation state of magnesium is preferably substantially constant from the surface of the negative electrode active material layer to the depth of 2 × 10⁻⁷ nm in the depth direction. Here, the surface of the negative electrode active material layer means a surface on a side constituting a surface of the electrode of both surfaces of the negative electrode active material layer. A back surface means a surface on a side opposite to this surface, that is, a surface on a side constituting an interface between a current collector and the negative electrode active material layer. Whether the negative electrode active material layer contains the above elements or not can be confirmed based on an X-ray photoelectron spectroscopy (XPS) method. Furthermore, it can also be confirmed similarly based on the XPS method that the negative electrode active material layer has the above peak and has an oxidation state of magnesium.

The positive electrode and the negative electrode are separated by an inorganic separator or an organic separator for allowing a magnesium ion to pass through while preventing short circuit due to contact between both electrodes. Examples of the inorganic separator include a glass filter and a glass fiber. Examples of the organic separator include a synthetic resin porous film including polytetrafluoroethylene, polypropylene, or polyethylene, and can have a structure in which two or more kinds of these porous films are laminated. Among these films, a polyolefin porous film is preferable because the polyolefin porous film exhibits an excellent short circuit preventing effect, and can improve safety of a battery due to a shutdown effect.

The electrolyte layer can be constituted by the electrolytic solution according to the first and second aspects of the present disclosure and a polymer compound including a holding body for holding the electrolytic solution. The polymer compound may be swollen by the electrolytic solution. In this case, the polymer compound swollen by the electrolytic solution may be gel-like. Examples of the polymer compound include polyacrylonitrile, polyvinylidene fluoride, a copolymer of vinylidene fluoride and hexafluoropropylene, polytetrafluoroethylene, polyhexafluoropropylene, polyethylene oxide, polypropylene oxide, polyphosphazene, polysiloxane, polyvinyl acetate, polyvinyl alcohol, polymethyl methacrylate, polyacrylic acid, polymethacrylic acid, styrene-butadiene rubber, nitrile-butadiene rubber, polystyrene, and polycarbonate. Polyacrylonitrile, polyvinylidene fluoride, polyhexafluoropropylene, or polyethylene oxide is particularly preferable from a viewpoint of electrochemical stability. The electrolyte layer may be a solid electrolyte layer.

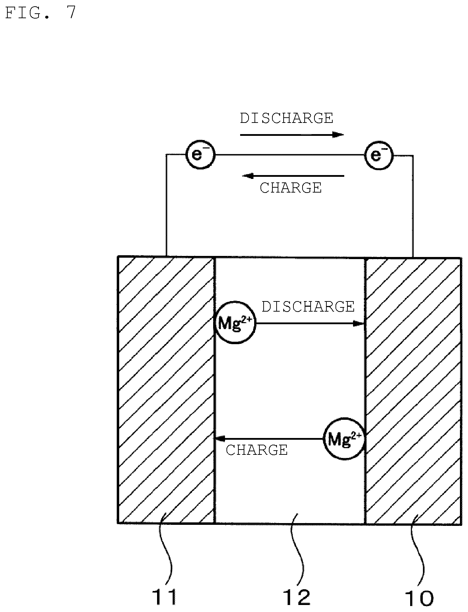

In the magnesium secondary battery having the above-described configuration, as illustrated in the conceptual diagram of the electrochemical device (battery) in FIG. 7, a magnesium ion (Mg²⁺) moves from a positive electrode to a negative electrode through an electrolyte layer during charging, and electric energy is thereby converted into chemical energy for power storage. The magnesium ion returns from the negative electrode to the positive electrode through the electrolyte layer during discharging, and electric energy is thereby generated.

When the electrochemical device according to the first and second aspects of the present disclosure is a battery (primary battery or secondary battery) having an electrolyte layer including the electrolytic solution according to the first and second aspects of the present disclosure, for example, the battery can be used as a driving power source or an auxiliary power source of a notebook type personal computer, a personal digital assistant (PDA), a mobile phone, a smart phone, a master cordless phone or a slave cordless phone, a video movie, a digital still camera, an electronic book, an electronic dictionary, a portable music player, a radio, a headphone, a game machine, a navigation system, a memory card, a cardiac pacemaker, a hearing aid, an electric tool, an electric shaver, a refrigerator, an air conditioner, a television receiver, a stereo, a water heater, a microwave oven, a dishwasher, a washing machine, a dryer, a lighting apparatus, a toy, a medical device, a robot, a road conditioner, a traffic light, a railway vehicle, a golf cart, an electric cart, or an electric car (including a hybrid car). Furthermore, the battery can be mounted on a building such as a house, a power storage power source for power generation facilities, or the like, or can be used in order to supply power thereto. In an electric car, a conversion device for converting electric power into a driving force by receiving power is generally a motor. A control device (controller) for performing information processing relating to vehicle control includes a control device for displaying the remaining amount of a battery based on information on the remaining amount of the battery. Furthermore, the battery can be used in a power storage device in a so-called smart grid. Such a power storage device not only supplies electric power but also can store electric power by receiving electric power from another power source. Examples of the other power source include thermal power generation, nuclear power generation, hydropower generation, a solar battery, wind power generation, geothermal power generation, and a fuel battery (including a biofuel battery).

The electrochemical device (or secondary battery) according to the first and second aspects of the present disclosure including the above various preferable modes and configurations can be applied to a secondary battery, a control unit (controller) for controlling a secondary battery, and a secondary battery in a battery pack having an exterior enclosing the secondary battery. In this battery pack, for example, the control unit controls charge/discharge, overdischarge, or overcharge of the secondary battery.

The electrochemical device (or secondary battery) according to the first and second aspects of the present disclosure including the above various preferable modes and configurations can be applied to a secondary battery in an electronic device that receives electric power from the secondary battery.

The electrochemical device (or secondary battery) according to the first and second aspects of the present disclosure including the above various preferable modes and configurations can be applied to a secondary battery in an electric vehicle including a conversion device for converting electric power supplied from the secondary battery into a driving force of the vehicle and a control device (controller) for performing information processing related to vehicle control based on information on the secondary battery. In this electric vehicle, the conversion device typically receives electric power from the secondary battery, drives a motor, and generates a driving force. Driving of the motor can also use regenerative energy. Furthermore, for example, the control device (controller) performs information processing on vehicle control based on the remaining amount of a secondary battery. Examples of this electric vehicle include a so-called hybrid car in addition to an electric car, an electric motorcycle, an electric bicycle, and a railway vehicle.

The electrochemical device (or secondary battery) according to the first and second aspects of the present disclosure including the above various preferable modes and configurations can be applied to a secondary battery in a power system configured to receive electric power from the secondary battery and/or to supply electric power from a power source to the secondary battery. This power system may be any power system as long as using electric power, and includes a simple power device. Examples of this power system include a smart grid, a home energy management system (HEMS), and a vehicle. The power system can also store power.

The electrochemical device (or secondary battery) according to the first and second aspects of the present disclosure including the above various preferable modes and configurations can be applied to a secondary battery in a power storage power source including a secondary battery and configured to be connected to an electronic device to which electric power is supplied. This power storage power source can be basically used for any power system or power device regardless of application of the power storage power source, but can be used for a smart grid, for example.

Alternatively, examples of the electrochemical device include a capacitor, a sensor, and a magnesium ion filter. The capacitor includes a positive electrode, a negative electrode, and a separator sandwiched between the positive electrode and the negative electrode and impregnated with an electrolytic solution.

### Example 1

Example 1 relates to the electrolytic solution and electrochemical device according to the first and second aspects of the present disclosure.

The electrolytic solution of Example 1 is an electrolytic solution for an electrochemical device including a negative electrode including a magnesium-based material, in which a 2,2,6,6-tetramethylpiperidine-1-oxyl free radical [see the above structural formula (1-1)] or a derivative thereof is added. Alternatively, the electrolytic solution of Example 1 is an electrolytic solution for an electrochemical device including a negative electrode including a magnesium-based material, in which at least one of substances having the above structural formulas (1-1), (1-2), (1-3), (1-4), and (1-5) is added. Further, the electrochemical device (or secondary battery) of Example 1 is an electrochemical device including a negative electrode including a magnesium-based material, and includes an electrolytic solution having a 2,2,6,6-tetramethylpiperidine-1-oxyl free radical [see the above structural formula (1-1)] or a derivative thereof added thereto. Alternatively, the electrochemical device (or secondary battery) of Example 1 is an electrochemical device including a negative electrode including a magnesium-based material, and includes an electrolytic solution having at least one of substances having the above structural formulas (1-1), (1-2), (1-3), (1-4), and (1-5) added thereto. That is, the electrochemical device of Example 1 is specifically a battery (specifically, a primary battery or a secondary battery, more specifically, a primary battery or a secondary battery in which a negative electrode (specifically, negative electrode active material) includes a magnesium-based material) having an electrolyte layer including the electrolytic solution of Example 1. Further, the electrochemical device includes a positive electrode including a material containing sulfur (S) in Example 1.

In Example 1, the electrolytic solution contains a sulfone and a magnesium salt dissolved in the sulfone. The magnesium salt includes MgXₙ (where n is 1 or 2, and X is a monovalent or divalent anion). Here, X includes a molecule containing a halogen, -SO₄, -NO₃, or a hexaalkyldisiazide group. Specifically, the halide (molecule containing a halogen) includes MgX₂ (X = Cl, Br, or I). More specifically, the halide includes MgCl₂ or MgBr₂ in Example 1. Alternatively, the magnesium salt includes at least one magnesium salt selected from the group consisting of magnesium perchlorate (Mg(ClO₄)₂), magnesium nitrate (Mg(NO₃)₂), magnesium sulfate (MgSO₄), magnesium tetrafluoroborate (Mg(BF₄)₂), magnesium tetraphenylborate (Mg(B(C₆H₅)₄)₂, magnesium hexafluorophosphate (Mg(PF₆)₂), magnesium hexafluoroarsenate (Mg(AsF₆)₂), magnesium perfluoroalkylsulfonate ((Mg(R_{f1}SO₃)₂), where R_{f1} is a perfluoroalkyl group), magnesium perfluoroalkylsulfonylimide (Mg((R_{f2}SO₂)₂N)₂, where R_{f2} is a perfluoroalkyl group), and magnesium hexaalkyl disilazide ((Mg(HRDS)₂), where R is an alkyl group). The sulfone includes an alkyl sulfone represented by R₁R₂SO₂ (where R₁ and R₂ each represent an alkyl group), and specifically, ethyl-n-propyl sulfone (EnPS) .

An electrolytic solution (MgCl₂-EnPS) of Example 1A was prepared as follows.

A reagent was weighed and mixed in a glove box (argon gas atmosphere/dew point -80°C to -90°C). This applies to the following examples similarly. Thereto was added 3.81 g of anhydrous magnesium(II) chloride (MgCl₂) while 100 ml of dehydrated methanol was stirred with a stirrer. It was confirmed by measuring a temperature outside a reaction container with a contact type thermometer that a slight amount of heat was generated when MgCl₂ was dissolved in methanol. This heat generation is due to heat of reaction when methanol is coordinated to Mg, and it is considered that methanol is coordinated to Mg in methanol. Furthermore, cloudiness was observed slightly even after MgCl₂ was dissolved. It is considered that this is due to generation of Mg(OH)₂ by a reaction between water remaining in methanol and Mg. The amount of cloudiness was extremely small, and therefore operation was continued without filtration.

After MgCl₂ was dissolved, 43.6 g of EnPS was added under stirring with a stirrer. Then, this solution was taken out of the glove box while being kept in a state in which atmosphere was not mixed, and methanol was removed by heating and stirring the solution at 120°C for 2 hours while the pressure was reduced using a rotary pump. When the amount of methanol was reduced, a white precipitate was generated. However, when heating was continued under reduced pressure, the generated precipitate was dissolved. It is considered that this change in solubility is caused by exchange of a Mg ligand from methanol to EnPS. Removal of methanol was confirmed by ¹H NMR measurement.

In the sample after removal of methanol, cloudiness generated when MgCl₂ was dissolved in methanol remained, and therefore filtration (pore diameter 0.45 µm; manufactured by Whatman Inc.) was performed in the glove box. The obtained electrolytic solution had a molar ratio of Mg : Cl : EnPS of 1 : 2 : 8 and a Mg concentration of 0.95 mol/l. A predetermined amount of a substance (TEMPO) represented by the structural formula (1-1) was added to the filtrated electrolytic solution.

An electrolytic solution (MgBr₂-EnPS) of Example 1B was prepared as follows. That is, 3.70 g of anhydrous magnesium(II) bromide (MgBr₂) was added to 43.6 g of EnPS, and was then dissolved by stirring to prepare an electrolytic solution. A predetermined amount of a substance (TEMPO) represented by the structural formula (1-1) was added to the obtained electrolytic solution, and was then dissolved by stirring with a stirrer.

In addition, a magnesium-sulfur secondary battery (coin battery CR2016 type) containing sulfur (S) in a positive electrode (that is, including a positive electrode containing sulfur as a positive electrode active material) and containing magnesium in a negative electrode was manufactured. Specifically, the coin battery was manufactured using magnesium (Mg) as a negative electrode and sulfur (S) as a positive electrode. Then, a relationship between the addition ratio of the substance (TEMPO) represented by the structural formula (1-1) and cycle characteristics was examined. Test conditions are indicated in Table 1 below.

**<Table 1>**

| | |
|---|---|
| Discharge condition: | 0.1 mA (constant current)/ cutoff voltage 0.7 V |
| Charge condition: | 0.1 mA (constant current)/ cutoff voltage 2.5 V |

Incidentally, to prepare the positive electrode 23, 10% by mass of sulfur (S₈), 60% by mass of Ketjen black as a conductive auxiliary agent, and 30% by mass of polytetrafluoroethylene (PTFE) as a binder were mixed using an agate mortar. The resultant mixture was then rolled for about 10 times using a roller compactor while being softened with acetone. Thereafter, the resultant mold was vacuum dried for 12 hours at 70°C. This made it possible to obtain a positive electrode.

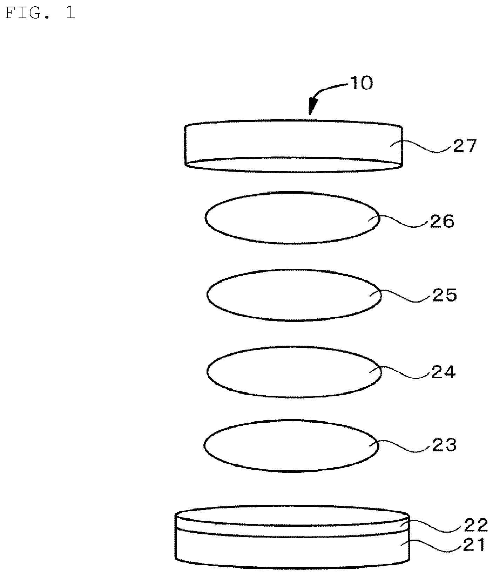

FIG. 1 illustrates a schematic view illustrating an exploded state of a coin battery 10. A gasket 22 was placed on a coin battery can 21, on which a positive electrode 23 including sulfur, a glass fiber separator 24, a negative electrode 25 including a 0.25-mm-thick Mg plate having a diameter of 1.5 mm, a spacer 26 including a 0.5-mm-thick stainless-steel plate, and a coin battery lid 27 were stacked in this order and then sealed inside by crimping the coin battery can 21. The spacer 26 was previously spot-welded to the coin battery lid 27. The separator 24 contained the electrolytic solution of Example 1A or 1B. As described above, the electrolytic solution had a molar ratio of MgCl₂ : EnPS of 1 : 8 or MgBr₂ : EnPS of 1 : 16, and a molarity of 0.5 mol/l.

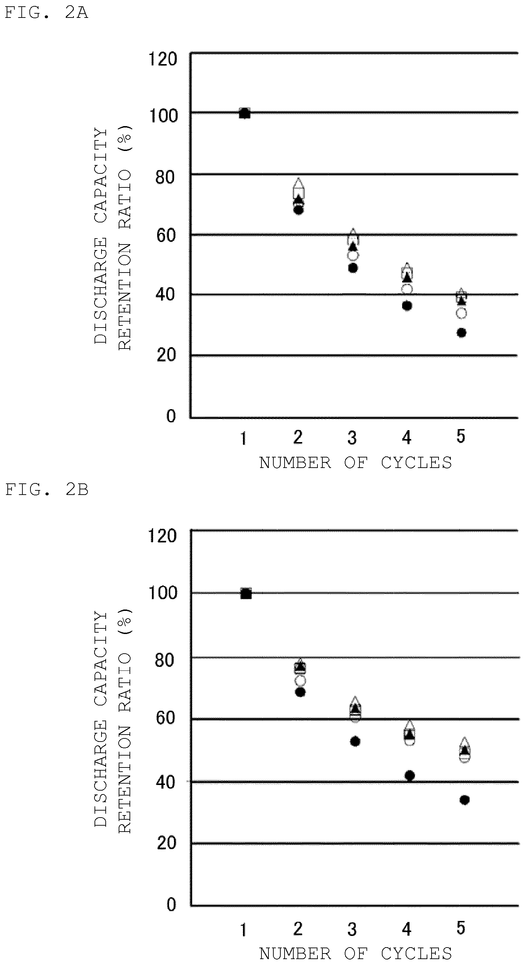

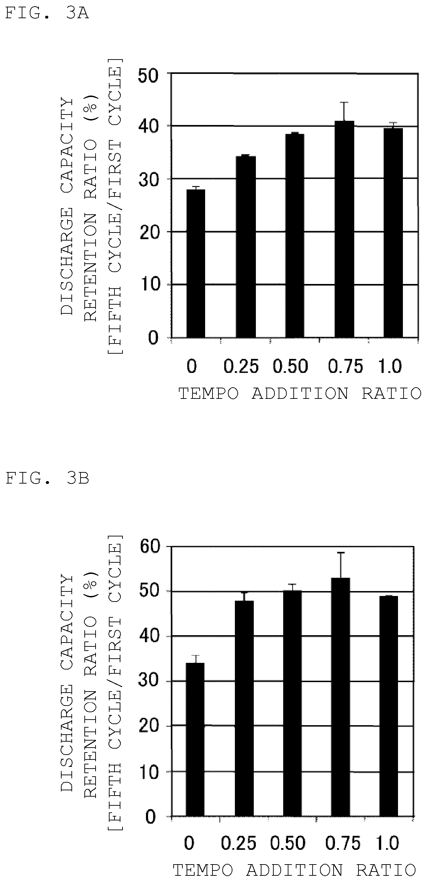

FIGS. 2A and 2B each illustrate a plot of a relationship between the number of charge/discharge cycles and a discharge capacity retention ratio (unit: %) in the magnesium-sulfur secondary battery containing the electrolytic solutions of Examples 1A and 1B containing TEMPO having a predetermined concentration. Incidentally, the discharge capacity retention ratio (unit: %) is a ratio of a discharge capacity at each discharge cycle when the discharge capacity at the first cycle is assumed to be 100%. The addition ratio of TEMPO was set to 0.25% by mass (indicated by white circles in FIGS. 2A and 2B), 0.50% by mass (indicated by black triangles in FIGS. 2A and 2B), 0.75% by mass (indicated by white triangles in FIGS. 2A and 2B), and 1.0% by mass (indicated by white squares in FIGS. 2A and 2B). In addition, the data on the addition ratio of TEMPO of 0% are indicated by black circles in FIGS. 2A and 2B. In each of the tests, two magnesium-sulfur secondary batteries are used, and the data are expressed as mean values. Example 1A using MgCl₂ and Example 1B using MgBr₂ as magnesium salts show that the discharge capacity and the discharge capacity retention ratio maintain higher values due to the addition of TEMPO although they slightly vary depending on the addition ratio of TEMPO, as compared to those of the magnesium-sulfur secondary batteries of Comparative Examples 1A and 1B in which TEMPO has not been added. FIGS. 3A and 3B illustrate discharge capacity retention ratios (unit: %) at the fifth cycle of discharge when the discharge capacity retention ratio at the first cycle of discharge is set to 100% in the magnesium secondary battery containing an electrolytic solution of Examples 1A and 1B. The discharge capacity retention ratio was 28% in Comparative Example 1A, whereas in the cases of adding TEMPO in amounts of 0.5% by mass and 0.75% by mass in Example 1A, the discharge capacity retention ratio was 40%. The discharge capacity retention ratio was 32% in Comparative Example 1B, whereas in the cases of adding TEMPO in amounts of 0.5% by mass and 0.75% by mass in Example 1B, the discharge capacity retention ratio was 50%.

From the results described above, it was found that the addition of TEMPO could improve cycle characteristics of the magnesium-sulfur secondary battery. Incidentally, a similar effect was obtained even with a substance having another TEMPO skeleton such as structural formula (1-2), (1-3), (1-4), or (1-5). TEMPO or a derivative thereof, or a substance having the above structural formula (generically referred to as a "TEMPO or the like") is a free radical, and therefore, it is predicted that such a free radical has an affinity for negatively charged polysulfide which is a reduced form of sulfur produced as a battery discharges. This allows the negatively charged polysulfide to coordinate to TEMPO or the like, and as a result, it is assumed that consumption (corrosion) reaction of polysulfide with magnesium is suppressed.

### Example 2

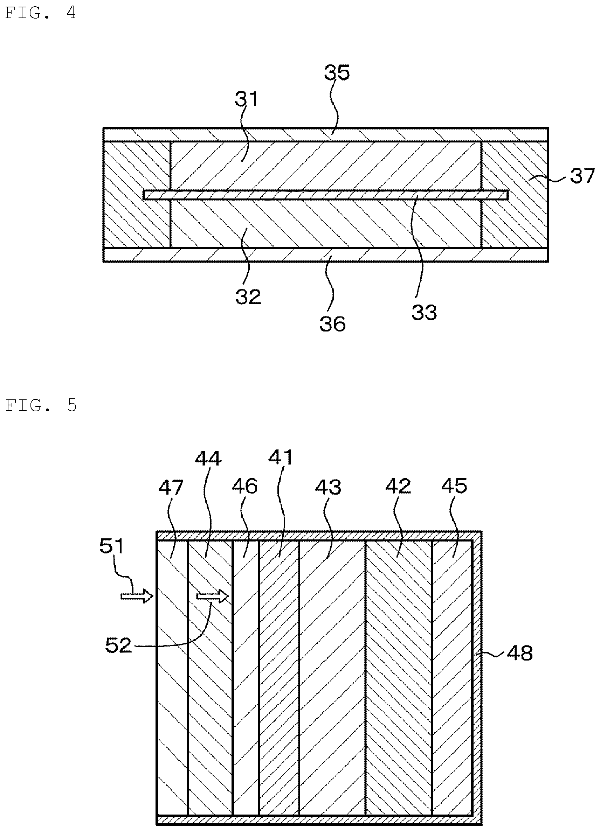

Example 2 is a modification of Example 1. As illustrated in the schematic cross-sectional view of FIG. 4, the electrochemical device of Example 2 includes a capacitor including a positive electrode 31, a negative electrode 32, and a separator 33 impregnated with the electrolytic solution of Example 1, in which the positive electrode 31 and the negative electrodes 32 are opposite to each other with the separator 33 interposed therebetween. Incidentally, a gel electrolyte film impregnated with the electrolytic solution of Example 1 may also be disposed on the surface of at least one of the separator 33, the positive electrode 31, and the negative electrode 32. Reference numerals 35 and 36 denote current collectors, and reference numeral 37 denotes a gasket.

Alternatively, the electrochemical device of Example 2 includes an air battery as illustrated in the conceptual diagram of FIG. 5. This air battery includes, for example, an oxygen selective permeable membrane 47 which hardly transmits water vapor and selectively transmits oxygen, an air electrode side current collector 44 including a conductive porous material, a diffusion layer 46 having porosity, disposed between the air electrode side current collector 44 and a porous positive electrode 41 and including a conductive material, the porous positive electrode 41 containing a conductive material and a catalyst material, a separator which hardly allows water vapor to pass through, an electrolytic solution (or solid electrolyte containing an electrolytic solution) 43, a negative electrode 42 which releases a magnesium ion, a negative electrode side current collector 45, and an exterior body 48 which houses these layers.

Oxygen 52 in air (atmosphere) 51 is selectively transmitted by the oxygen selective permeable membrane 47, passes through the air electrode side current collector 44 including a porous material, is diffused by the diffusion layer 46, and is supplied to the porous positive electrode 41. Progress of oxygen which has been transmitted by the oxygen selective permeable membrane 47 is partially shielded by the air electrode side current collector 44, but oxygen which has passed through the air electrode side current collector 44 is diffused by the diffusion layer 46 and spreads. Therefore, oxygen is efficiently distributed throughout the porous positive electrode 41, and supply of oxygen to the entire surface of the porous positive electrode 41 is not obstructed by the air electrode side current collector 44. Furthermore, transmission of water vapor is suppressed by the oxygen selective permeable membrane 47. Therefore, deterioration due to an influence of moisture in air is small and oxygen is efficiently supplied to the entire porous positive electrode 41. Accordingly, a battery output can be increased, and the battery can be used stably for a long period of time.

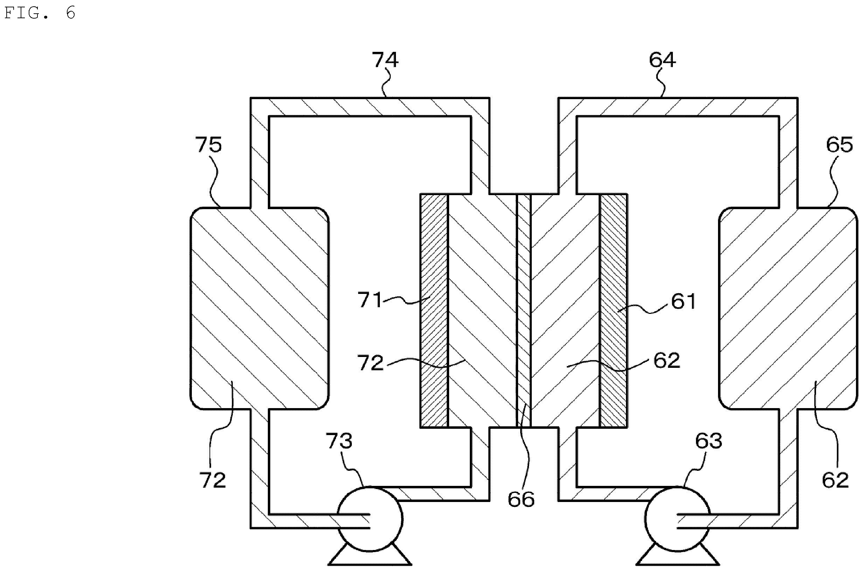

Alternatively, the electrochemical device of Example 2 includes a fuel battery as illustrated in the conceptual diagram of FIG. 6. This fuel battery includes, for example, a positive electrode 61, a positive electrode electrolytic solution 62, a positive electrode electrolytic solution transport pump 63, a fuel flow path 64, a positive electrode electrolytic solution storage container 65, a negative electrode 71, a negative electrode electrolytic solution 72, a negative electrode electrolytic solution transport pump 73, a fuel flow path 74, a negative electrode electrolytic solution storage container 75, and an ion exchange film 66. In the fuel flow path 64, the positive electrode electrolytic solution 62 continuously or intermittently flows (circulates) through the positive electrode electrolytic solution storage container 65 and the positive electrode electrolytic solution transport pump 63. In the fuel flow path 74, the negative electrode electrolytic solution 72 continuously or intermittently flows (circulates) through the negative electrode electrolytic solution storage container 75 and the negative electrode electrolytic solution transport pump 73. Power is generated between the positive electrode 61 and the negative electrode 71. As the positive electrode electrolytic solution 62, a solution obtained by adding a positive electrode active material to the electrolytic solutions of Example 1 can be used. As the negative electrode electrolytic solution 72, a solution obtained by adding a negative electrode active material to the electrolytic solutions of Example 1 can be used.

The negative electrode in the electrochemical device can also be manufactured by the following method. That is, a Mg electrolytic solution (Mg-EnPS) containing MgCl₂ and EnPS (ethyl-n-propyl sulfone) at a molar ratio of MgCl₂ : EnPS of 1 : 8 was prepared. Using this Mg electrolytic solution, Mg metal was precipitated on a Cu foil based on an electrolytic plating method to form a Mg plating layer on the Cu foil as a negative electrode active material layer. As a result of analyzing the surface of the thus obtained Mg plating layer based on the XPS method, it was determined that Mg, C, O, S, and Cl existed on the surface of the Mg plating layer. Furthermore, a Mg-derived peak observed in the surface analysis was not divided, and a single peak derived from Mg was observed in a range of 40 eV or more and 60 eV or less. Furthermore, the surface of the Mg plating layer was drilled in a depth direction by about 200 nm based on an Ar sputtering method, and the surface was analyzed based on the XPS method. As a result, it was determined that the position and shape of the Mg-derived peak after Ar sputtering had no change when compared to the position and shape of the peak before Ar sputtering. Even when a Mg electrolytic solution containing MgBr₂ and EnPS at a molar ratio of MgBr₂ : EnPS of 1 : 8 or a Mg electrolytic solution containing MgBr₂ and EiPS (ethyl-i-propyl sulfone) at a molar ratio of MgBr₂ : EiPS of 1 : 8 was used, it was possible to obtain a similar result.

### Example 3

In Example 3, the electrochemical device (specifically, a magnesium secondary battery) of the present disclosure and an application example thereof will be described.

The magnesium secondary battery as described in Example 1 in the present disclosure can be applied to a machine, a device, an appliance, an apparatus, and a system (an assembly of a plurality of devices or the like) which can be used as a power source for driving/operating the secondary battery or a power storage source for accumulating power without any particular limitation. The magnesium secondary battery (specifically, magnesium-sulfur secondary battery) used as a power source may be a main power source (power source used preferentially) or an auxiliary power source (power source used in place of a main power source, or by switching from the main power source). In a case of using a magnesium secondary battery as an auxiliary power source, a main power source is not limited to a magnesium secondary battery.

Specific examples of an application of the magnesium secondary battery (specifically, magnesium-sulfur secondary battery) in the present disclosure include various electronic devices and electrical devices (including portable electronic devices) such as a video camera, a camcorder, a digital still camera, a mobile phone, a personal computer, a television receiver, various display devices, a cordless phone, a headphone stereo, a music player, a portable radio, electronic paper such as an electronic book or an electronic newspaper, or a portable information terminal including PDA; a toy; a portable living appliance such as an electric shaver; a lighting appliance such as an interior light; a medical electronic device such as a pacemaker or a hearing aid; a storage device such as a memory card; a battery pack used as a detachable power source for a personal computer or the like; an electric tool such as an electric drill or an electric saw; a power storage system or a home energy server (household power storage device) such as a household battery system for accumulating electric power in preparation for emergency or the like and a power supply system; a power storage unit and a backup power source; an electric vehicle such as an electric car, an electric motorcycle, an electric bicycle, or Segway (registered trademark); and a power driving force conversion device of an airplane or a ship (specifically, for example, a power motor), but are not limited to these applications.

Among these applications, the magnesium secondary battery in the present disclosure is effectively applied to a battery pack, an electric vehicle, a power storage system, a power supply system, an electric tool, an electronic device, an electrical device, or the like. The battery pack is a power source using the magnesium secondary battery in the present disclosure, and is a so-called assembled battery or the like. The electric vehicle is a vehicle which operates (travels) using the magnesium secondary battery according to the present disclosure as a driving power source, and may be a car (hybrid car or the like) also including a drive source other than the secondary battery. The power storage system (power supply system) is a system using the magnesium secondary battery in the present disclosure as a power storage source. For example, in the household power storage system (power supply system), power is accumulated in the magnesium secondary battery in the present disclosure as a power storage source, and therefore household electrical products or the like can be used using electric power. The electric tool is a tool in which a movable portion (e.g., a drill) can move using the magnesium secondary battery in the present disclosure as a driving power source. The electronic device and the electrical device are devices that exhibit various functions using the magnesium secondary battery in the present disclosure as a power source (power supply source) for operation.

Hereinafter, a cylinder type magnesium secondary battery and a flat plate type laminated film type magnesium secondary battery will be described.

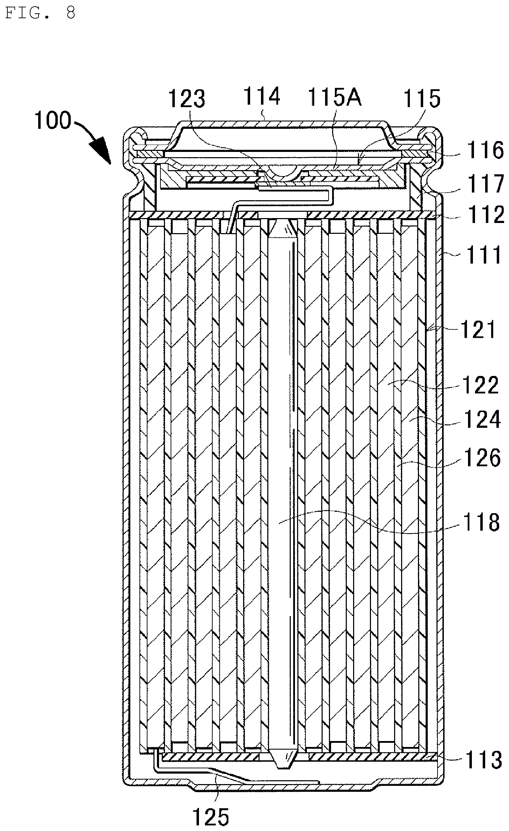

FIG. 8 illustrates a schematic cross-sectional view of a cylinder type magnesium secondary battery 100. In the magnesium secondary battery 100, an electrode structure 121 and a pair of insulating plates 112, 113 are housed inside an electrode structure housing member 111 that has a substantially hollow cylindrical shape. The electrode structure 121 can be manufactured, for example, by stacking a positive electrode 122 and a negative electrode 124 with a separator 126 interposed therebetween to obtain an electrode structure and then winding the electrode structure. The electrode structure housing member (battery can) 111 has a hollow structure in which one end is closed and the other end is open, and includes iron (Fe), aluminum (Al), or the like. Nickel (Ni) or the like may be plated on a surface of the electrode structure housing member 111. The pair of insulating plates 112, 113 are disposed so as to sandwich the electrode structure 121 and to extend perpendicularly to a winding peripheral surface of the electrode structure 121. A battery lid 114, a safety valve mechanism 115, and a positive temperature coefficient device (PTC device) 116 are crimped to the open end of the electrode structure housing member 111 through a gasket 117, and the electrode structure housing member 111 is thereby sealed. For example, the battery lid 114 is manufactured from the same material as that of the electrode structure housing member 111. The safety valve mechanism 115 and the PTC device 116 are disposed inside the battery lid 114, and the safety valve mechanism 115 is electrically connected to the battery lid 114 through the PTC device 116. In the safety valve mechanism 115, when an internal pressure becomes a certain level or higher due to internal short circuit, external heating, or the like, a disk plate 115A is inverted. As a result, the electrical connection between the battery lid 114 and the electrode structure 121 is disconnected. In order to prevent abnormal heat generation due to a large amount of current, resistance of the PTC device 116 increases with an increase in temperature. For example, the gasket 117 is manufactured from an insulating material. A surface of the gasket 117 may be coated with asphalt or the like.

A center pin 118 is inserted into a winding center of the electrode structure 121. However, the center pin 118 may not be inserted into the winding center. A positive electrode lead portion 123 manufactured from a conductive material such as aluminum is connected to the positive electrode 122. Specifically, the positive electrode lead portion 123 is attached to a positive electrode current collector. A negative electrode lead portion 125 manufactured from a conductive material such as copper is connected to the negative electrode 124. Specifically, the negative electrode lead portion 125 is attached to a negative electrode current collector. The negative electrode lead portion 125 is welded to the electrode structure housing member 111 and is electrically connected to the electrode structure housing member 111. The positive electrode lead portion 123 is welded to the safety valve mechanism 115 and is electrically connected to the battery lid 114. Incidentally, in the example illustrated in FIG. 8, the negative electrode lead portion 125 is disposed at one place (outermost peripheral portion of the wound electrode structure), but may be disposed at two places (outermost peripheral portion and innermost peripheral portion of the wound electrode structure).

The electrode structure 121 includes the positive electrode 122 having a positive electrode active material layer formed on the positive electrode current collector (specifically, on both surfaces of the positive electrode current collector) and the negative electrode 124 having a negative electrode active material layer formed on the negative electrode current collector (specifically, on both surfaces of the negative electrode current collector) stacked with the separator 126 interposed therebetween. The positive electrode active material layer is not formed in a region of the positive electrode current collector to which the positive electrode lead portion 123 is attached. The negative electrode active material layer is not formed in a region of the negative electrode current collector to which the negative electrode lead portion 125 is attached.

Specifications of the magnesium secondary battery 100 are exemplified in the following Table 2, but are not limited thereto.

**<Table 2>**

| | |
|---|---|
| Positive electrode current collector | Aluminum foil having a thickness of 20 µm |
| Positive electrode active material layer | Thickness per surface 50 µm |
| Positive electrode lead portion | Aluminum (A1) foil having a thickness of 100 µm |
| Negative electrode current collector | Copper foil having a thickness of 20 µm |
| Negative electrode active material layer | Thickness per surface 50 µm |
| Negative electrode lead portion | Nickel (Ni) foil having a thickness of 100 µm |

For example, the magnesium secondary battery 100 can be manufactured based on the following procedure.

That is, first, positive electrode active material layers are formed on both surfaces of a positive electrode current collector, and negative electrode active material layers are formed on both surfaces of the negative electrode current collector.

Thereafter, the positive electrode lead portion 123 is attached to the positive electrode current collector using a welding method or the like. Furthermore, the negative electrode lead portion 125 is attached to the negative electrode current collector using a welding method or the like. Subsequently, the positive electrode 122 and the negative electrode 124 are stacked with a 20-µm-thick microporous polyethylene film separator 126 interposed therebetween, and are wound (more specifically, the electrode structure (stacked structure) of the positive electrode 122/separator 126/negative electrode 124/separator 126 is wound) to manufacture the electrode structure 121. Thereafter, a protective tape (not illustrated) is adhered to an outermost peripheral portion. Thereafter, the center pin 118 is inserted into a center of the electrode structure 121. Subsequently, the electrode structure 121 is housed inside the electrode structure housing member (battery can) 111 while the electrode structure 121 is sandwiched between the pair of insulating plates 112 and 113. In this case, a tip end of the positive electrode lead portion 123 is attached to the safety valve mechanism 115, and a tip end of the negative electrode lead portion 125 is attached to the electrode structure housing member 111 using a welding method or the like. Thereafter, the electrolytic solution of Example 1 is injected based on a depressurization method, and the separator 126 is impregnated with the electrolytic solution. Subsequently, the battery lid 114, the safety valve mechanism 115, and the PTC device 116 are crimped to an open end of the electrode structure housing member 111 through the gasket 117.

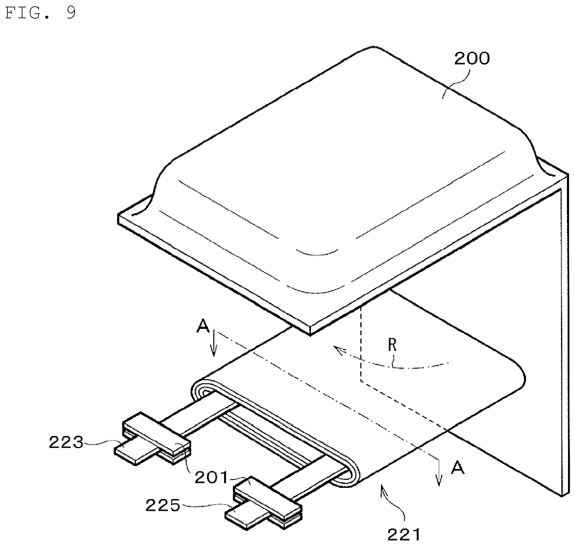

Next, a flat plate type laminated film type secondary battery will be described. FIG. 9 illustrates a schematic exploded perspective view of the secondary battery. In this secondary battery, an electrode structure 221 basically similar to that described above is housed inside an exterior member 200 including a laminated film. The electrode structure 221 can be manufactured by stacking a positive electrode and a negative electrode with a separator and an electrolyte layer interposed therebetween, and then winding this stacked structure. A positive electrode lead portion 223 is attached to the positive electrode, and a negative electrode lead portion 225 is attached to the negative electrode. An outermost peripheral portion of the electrode structure 221 is protected by a protective tape. The positive electrode lead portion 223 and the negative electrode lead portion 225 protrude in the same direction from the inside to the outside of the exterior member 200. The positive electrode lead portion 223 includes a conductive material such as aluminum. The negative electrode lead portion 225 includes a conductive material such as copper, nickel, or stainless steel.

The exterior member 200 is a single film foldable in a direction of the arrow R illustrated in FIG. 9, and has a recess (emboss) for housing the electrode structure 221 in a part of the exterior member 200. The exterior member 200 is, for example, a laminated film obtained by laminating a fusion layer, a metallic layer, and a surface protective layer in this order. In a step of manufacturing the secondary battery, the exterior member 200 is folded such that the fusion layers face each other through the electrode structure 221, and then outer peripheral edges of the fusion layers are fused to each other. However, the exterior member 200 may be obtained by bonding two laminated films to each other using an adhesive or the like. For example, the fusion layer includes a film of polyethylene, polypropylene, or the like. For example, the metallic layer includes an aluminum foil or the like. For example, the surface protective layer includes nylon, polyethylene terephthalate, or the like. Above all, the exterior member 200 is preferably an aluminum laminated film obtained by laminating a polyethylene film, an aluminum foil, and a nylon film in this order. However, the exterior member 200 may be a laminated film having another laminated structure, a polymer film such as polypropylene, or a metallic film. Specifically, the exterior member 200 includes a moisture-resistant aluminum laminated film (total thickness 100 µm) obtained by laminating a nylon film (thickness 30 µm), an aluminum foil (thickness 40 µm), and an unstretched polypropylene film (thickness 30 µm) in this order from outside.

In order to prevent entry of outside air, an adhesive film 201 is inserted between the exterior member 200 and the positive electrode lead portion 223 and between the exterior member 200 and the negative electrode lead portion 225. The adhesive film 201 includes a material having adhesion to the positive electrode lead portion 223 and the negative electrode lead portion 225, for example, a polyolefin resin, more specifically, a polyolefin resin such as polyethylene, polypropylene, modified polyethylene, or modified polypropylene.

Next, several application examples of the magnesium secondary battery in the present disclosure will be specifically described. Incidentally, configurations of application examples described below are merely examples, and can be appropriately changed.

A battery pack is a simple type battery pack (so-called soft pack) including one of the magnesium secondary batteries in the present disclosure, and is mounted on an electronic device typified by a smartphone, for example. Alternatively, the battery pack includes an assembled battery including six magnesium secondary batteries connected in two parallel and three series in the present disclosure. Incidentally, the connection form of the magnesium secondary batteries may be a series form, a parallel form, or a mixed form thereof.

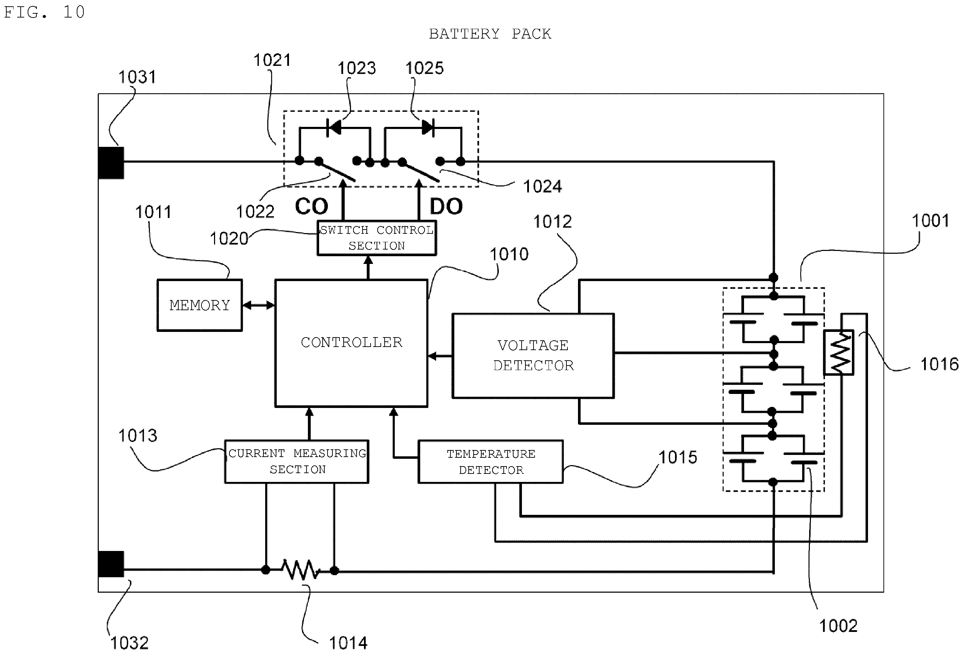

FIG. 10 illustrates a block diagram illustrating a circuit configuration example in a case where the magnesium secondary battery in the present disclosure is applied to a battery pack. The battery pack includes a cell (assembled battery) 1001, an exterior member, a switch section 1021, a current detection resistor 1014, a temperature detection element 1016, and a controller 1010. The switch section 1021 includes a charge control switch 1022 and a discharge control switch 1024. Furthermore, the battery pack includes a positive electrode terminal 1031 and a negative electrode terminal 1032. At the time of charging, the positive electrode terminal 1031 and the negative electrode terminal 1032 are connected to a positive electrode terminal and a negative electrode terminal of a charger, respectively, and are charged. Furthermore, at the time of using an electronic device, the positive electrode terminal 1031 and the negative electrode terminal 1032 are connected to a positive electrode terminal and a negative electrode terminal of the electronic device, respectively, and are discharged.

The cell 1001 is constituted by connecting a plurality of magnesium secondary batteries 1002 in the present disclosure in series and/or in parallel. Incidentally, FIG. 10 illustrates a case where the six magnesium secondary batteries 1002 are connected in two parallel and three series (2P3S). However, any other connection method such as p parallel and q series (where p and q are integers) may be used.

The switch section 1021 includes the charge control switch 1022, a diode 1023, the discharge control switch 1024, and a diode 1025, and is controlled by the controller 1010. The diode 1023 has a backward polarity with respect to a charge current flowing in a direction from the positive electrode terminal 1031 to the cell 1001, and a forward polarity with respect to a discharge current flowing in a direction from the negative electrode terminal 1032 to the cell 1001. The diode 1025 has a forward polarity with respect to the charge current and a backward polarity with respect to the discharge current. Incidentally, in the example, the switch section is disposed on a plus (+) side, but may be disposed on a minus (-) side. The controller 1010 controls the charge control switch 1022 such that the charge control switch 1022 is closed in a case where a battery voltage reaches an overcharge detection voltage, and no charge current flows in a current path of the cell 1001. After the charge control switch 1022 is closed, only discharge can be performed through the diode 1023. Furthermore, the controller 1010 controls the charge control switch 1022 such that the charge control switch 1022 is closed in a case where a large amount of current flows during charging, and a charge current flowing in a current path of the cell 1001 is cut off. The controller 1010 controls the discharge control switch 1024 such that the discharge control switch 1024 is closed in a case where a battery voltage reaches an overdischarge detection voltage, and no discharge current flows in a current path of the cell 1001. After the discharge control switch 1024 is closed, only charge can be performed through the diode 1025. Furthermore, the controller 1010 controls the discharge control switch 1024 such that the discharge control switch 1024 is closed in a case where a large amount of current flows during discharging, and a discharge current flowing in a current path of the cell 1001 is cut off.

For example, the temperature detection element 1016 includes a thermistor, and is disposed in the vicinity of the cell 1001. A temperature measuring section 1015 measures the temperature of the cell 1001 using the temperature detection element 1016, and sends the measurement result to the controller 1010. A voltage measuring section 1012 measures the voltage of the cell 1001 and the voltage of each of the magnesium secondary batteries 1002 constituting the cell 1001, performs A/D conversion of the measurement result, and sends the converted result to the controller 1010. A current measuring section 1013 measures a current using the current detection resistor 1014, and sends the measurement result to the controller 1010.

A switch control section 1020 controls the charge control switch 1022 and the discharge control switch 1024 of the switch section 1021 based on a voltage and a current sent from the voltage measuring section 1012 and the current measuring section 1013. When a voltage of any one of the magnesium secondary batteries 1002 becomes equal to or lower than the overcharge detection voltage or overdischarge detection voltage, or when a large amount of current rapidly flows, the switch control section 1020 sends a control signal to the switch section 1021, and thereby prevents overcharge, overdischarge, and overcurrent charge/discharge. The charge control switch 1022 and the discharge control switch 1024 can be constituted by a semiconductor switch such as a MOSFET. In this case, the diodes 1023, 1025 are constituted by parasitic diodes of a MOSFET. In a case where a p-channel type FET is used as a MOSFET, the switch control section 1020 supplies a control signal DO and a control signal CO to a gate of each of the charge control switch 1022 and the discharge control switch 1024. The charge control switch 1022 and the discharge control switch 1024 become conductive due to a gate potential lower than a source potential by a predetermined value or more. That is, in normal charging and discharging operation, each of the control signal CO and the control signal DO is set to a low level, and the charge control switch 1022 and the discharge control switch 1024 are caused to be conductive. In addition, for example, during overcharge or overdischarge, each of the control signal CO and the control signal DO is set to a high level, and the charge control switch 1022 and the discharge control switch 1024 are closed.

For example, a memory 1011 includes an erasable programmable read only memory (EPROM) which is a nonvolatile memory. In the memory 1011, a numerical value calculated by the controller 1010, an internal resistance value of each of the magnesium secondary batteries 1002 in an initial state, measured at a stage of a manufacturing step, and the like are previously stored, and can be rewritten appropriately. Furthermore, by causing the memory 1011 to store a full charge capacity of each of the magnesium secondary batteries 1002, the memory 1011 can calculate a remaining capacity together with the controller 1010, for example.

The temperature measuring section 1015 measures a temperature using the temperature detection element 1016, performs charge/discharge control at the time of abnormal heat generation, and performs correction in calculating the remaining capacity.

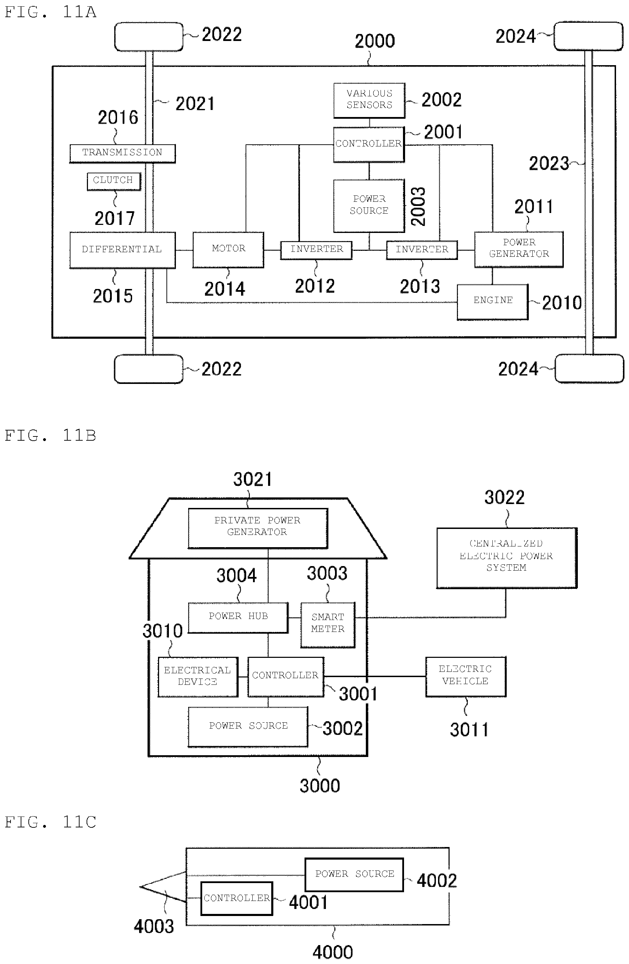

Next, FIG. 11A illustrates a block diagram illustrating a configuration of an electric vehicle such as a hybrid car which is an example of an electric vehicle. For example, the electric vehicle includes a controller 2001, various sensors 2002, a power source 2003, an engine 2010, a power generator 2011, inverters 2012, 2013, a driving motor 2014, a differential 2015, a transmission 2016, and a clutch 2017 in a housing 2000 made of metal. In addition, for example, the electric vehicle includes a front wheel drive shaft 2021, a front wheel 2022, a rear wheel drive shaft 2023, and a rear wheel 2024 connected to the differential device 2015 or the transmission 2016.

For example, the electric vehicle can travel using either the engine 2010 or the motor 2014 as a drive source. The engine 2010 is a main power source, and is a gasoline engine, for example. In a case where the engine 2010 is used as a power source, for example, a driving force (rotational force) of the engine 2010 is transmitted to the front wheel 2022 or the rear wheel 2024 through the differential 2015, the transmission 2016, and the clutch 2017 which are drive units. The rotational force of the engine 2010 is also transmitted to the power generator 2011. The power generator 2011 generates AC power using the rotational force. The AC power is converted into DC power through the inverter 2013. The DC power is accumulated in the power source 2003. Meanwhile, in a case where the motor 2014 which is a conversion section is used as a power source, electric power (DC power) supplied from the power source 2003 is converted into AC power through the inverter 2012, and the motor 2014 is driven using the AC power. The driving force (rotational force) converted from the electric power by the motor 2014 is transmitted to the front wheel 2022 or the rear wheel 2024 through the differential 2015, the transmission 2016, and the clutch 2017 which are drive sections, for example.

When the electric vehicle decelerates by a brake mechanism (not illustrated), a resistance force at the time of deceleration is transmitted to the motor 2014 as a rotational force, and the motor 2014 may generate AC power using this rotational force. The AC power is converted into DC power through the inverter 2012, and the DC regenerative power is accumulated in the power source 2003.

The controller 2001 controls operation of the entire electric vehicle, and includes a CPU, for example. The power source 2003 includes one or more magnesium secondary batteries (not illustrated) described in Example 1. The power source 2003 may have a configuration to accumulate electric power by being connected to an external power source and receiving electric power from the external power source. For example, the various sensors 2002 are used in order to control the number of revolutions of the engine 2010 and to control an opening degree of a throttle valve (throttle opening degree) (not illustrated). The various sensors 2002 include a speed sensor, an acceleration sensor, and an engine frequency sensor, for example.

Incidentally, a case where the electric vehicle is a hybrid car has been described. However, the electric vehicle may be a vehicle (electric car) which operates using only the power source 2003 and the motor 2014 without using the engine 2010.

Next, FIG. 11B illustrates a block diagram illustrating a configuration of a power storage system (power supply system). For example, the power storage system includes a controller 3001, a power source 3002, a smart meter 3003, and a power hub 3004 inside a house 3000 such as a general house or a commercial building.

For example, the power source 3002 is connected to an electrical device (electronic device) 3010 installed inside the house 3000, and can be connected to an electric vehicle 3011 which stops outside the house 3000. Furthermore, for example, the power source 3002 is connected to a private power generator 3021 installed in the house 3000 through a power hub 3004, and can be connected to an external centralized electric power system 3022 with the smart meter 3003 and the power hub 3004. For example, the electrical device (electronic device) 3010 includes one or more household electric appliances. Examples of the household electric appliances include a refrigerator, an air conditioner, a television receiver, and a water heater. For example, the private power generator 3021 is constituted by a solar power generator or a wind power generator. Examples of the electric vehicle 3011 include an electric car, a hybrid car, an electric motorcycle, an electric bicycle, and a Segway (registered trademark). Examples of the centralized electric power system 3022 include a commercial power source, a power generation device, a power transmission network, and a smart grid (next generation power transmission network). Furthermore, examples thereof include a thermal power plant, a nuclear power plant, a hydropower plant, and a wind power plant. Examples of the power generation device included in the centralized electric power system 3022 include various solar batteries, a fuel battery, a wind power generation device, a micro hydropower generation device, and a geothermal power generation device. However, the centralized electric power system 3022 and the power generation device are not limited thereto.

The controller 3001 controls operation of the entire power storage system (including a used state of the power source 3002), and includes a CPU, for example. The power source 3002 includes one or more magnesium secondary batteries (not illustrated) described in Example 1. For example, the smart meter 3003 is a network-compatible power meter installed in the house 3000 on a power demand side, and can communicate with a power supply side. In addition, for example, the smart meter 3003 controls balance between supply and demand in the house 3000 while communicating with outside, thereby allowing efficient and stable supply of energy.

In this power storage system, for example, electric power is accumulated in the power source 3002 from the centralized electric power system 3022 which is an external power source with the smart meter 3003 and the power hub 3004, and electric power is accumulated in the power source 3002 from the private power generator 3021 which is an independent power source with the power hub 3004. The electric power accumulated in the power source 3002 is supplied to the electrical device (electronic device) 3010 and the electric vehicle 3011 according to an instruction of the controller 3001. Therefore, the electrical device (electronic device) 3010 can be operated, and the electric vehicle 3011 can be charged. That is, the power storage system is a system which makes it possible to accumulate and supply electric power in the house 3000 using the power source 3002.

The electric power accumulated in the power source 3002 can be arbitrarily used. Therefore, for example, power is accumulated in the power source 3002 from the centralized electric power system 3022 at midnight when electricity charge is inexpensive, and the power accumulated in the power source 3002 can be used during the daytime when the electricity charge is expensive.

The power storage system described above may be installed in each house (each household) or may be installed in every two or more houses (two or more households).

Next, FIG. 11C illustrates a block diagram illustrating a configuration of the electric tool. For example, the electric tool is an electric drill, and includes a controller 4001 and a power source 4002 inside a tool body 4000 including a plastic material or the like. For example, a drill section 4003 which is a movable portion is rotatably attached to the tool body 4000. The controller 4001 controls operation of the entire electric tool (including a used state of the power source 4002), and includes a CPU, for example. The power source 4002 includes one or more magnesium secondary batteries (not illustrated) described in Example 1. The controller 4001 supplies electric power from the power source 4002 to the drill section 4003 in response to operation of an operation switch (not illustrated).

Hitherto, the present disclosure has been described based on preferable examples. However, the present disclosure is not limited to these examples. The composition of the electrolytic solution, the raw materials used in manufacturing, the manufacturing method, the manufacturing conditions, the characteristics of the electrolytic solution, and the configuration and structure of the electrochemical device and the battery, described in examples, are illustrative, are not limited thereto, and can be changed appropriately. The electrolytic solution of the present disclosure can be used as a gel electrolyte by mixing the electrolytic solution with an organic polymer (e.g., polyethylene oxide, polyacrylonitrile, or polyvinylidene fluoride (PVdF)).

### DESCRIPTION OF REFERENCE SYMBOLS

10: Coin battery
21: Coin battery can
22: Gasket
23: Positive electrode
24: Separator
25: Negative electrode
26: Spacer
27: Coin battery lid
31: Positive electrode
32: Negative electrode
33: Separator
35, 36: Current collector
37: Gasket
41: Porous positive electrode
42: Negative electrode
43: Separator and electrolytic solution
44: Air electrode side current collector
45: Negative electrode side current collector
46: Diffusion layer
47: Oxygen selective permeable membrane
48: Exterior body
51: Air (Atmosphere)
52: Oxygen
61: Positive electrode
62: Positive electrode electrolytic solution
63: Positive electrode electrolytic solution transport pump
64: Fuel flow path
65: Positive electrode electrolytic solution storage container
71: Negative electrode
72: Negative electrode electrolytic solution
73: Negative electrode electrolytic solution transport pump
74: Fuel flow path
75: Negative electrode electrolytic solution storage container
66: Ion exchange film
100: Magnesium secondary battery
111: Electrode structure housing member (battery can)
112, 113: Insulating plate
114: Battery lid
115: Safety valve mechanism
115A: Disk plate
116: Positive temperature coefficient device (PTC device)
117: Gasket
118: Center pin
121: Electrode structure
122: Positive electrode
123: Positive electrode lead portion
124: Negative electrode
125: Negative electrode lead portion
126: Separator
200: Exterior member
201: Adhesive film
221: Electrode structure
223: Positive electrode lead portion
225: Negative electrode lead portion
1001: Cell (assembled battery)
1002: Magnesium secondary battery
1010: Controller
1011: Memory
1012: Voltage measuring section
1013: Current measuring section
1014: Current detection resistor
1015: Temperature measuring section
1016: Temperature detection element
1020: Switch control section
1021: Switch section
1022: Charge control switch
1024: Discharge control switch
1023, 1025: Diode
1031: Positive terminal
1032: Negative terminal
CO, DO: Control signal
2000: Housing
2001: Controller
2002: Various sensors
2003: Power source
2010: Engine
2011: Power generator
2012, 2013: Inverter
2014: Driving motor
2015: Differential
2016: Transmission
2017: Clutch
2021: Front wheel drive shaft
2022: Front wheel
2023: Rear wheel drive shaft
2024: Rear wheel
3000: House
3001: Controller
3002: Power source
3003: Smart meter
3004: Power hub
3010: Electrical device (electronic device)
3011: Electric vehicle
3021: Private power generator
3022: Centralized electric power system
4000: Tool body
4001: Controller
4002: Power source
4003: Drill section

## Claims

1. An electrolytic solution for an electrochemical device including a negative electrode including a magnesium-based material, wherein a 2,2,6,6-tetramethylpiperidine-1-oxyl free radical or one of substances having the following structural formulas is added 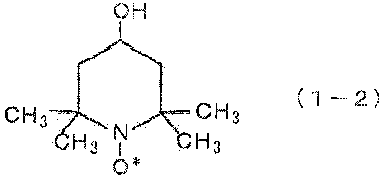 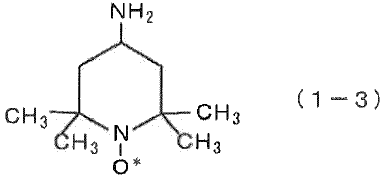 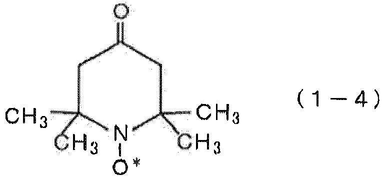 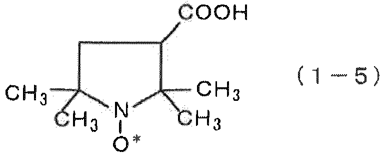 ; and wherein the electrolytic solution comprises a sulfone and a magnesium salt dissolved in the sulfone.

2. The electrolytic solution according to claim 1, wherein the electrochemical device includes a positive electrode including a material containing sulfur.

3. The electrolytic solution according to claim 1, wherein the magnesium salt includes MgXₙ, wherein n is 1 or 2, and X is a monovalent or divalent anion.

4. The electrolytic solution according to claim 3, wherein the magnesium salt containing a halogen includes MgX₂, wherein X is Cl, Br, or I.

5. The electrolytic solution according to claim 1, wherein the sulfone is an alkyl sulfone represented by R₁R₂SO₂, wherein R₁ and R₂ each represent an alkyl group, or an alkyl sulfone derivative, in particular, wherein
the alkyl sulfone is at least one alkyl sulfone selected from the group consisting of dimethyl sulfone, methyl ethyl sulfone, methyl-n-propyl sulfone, methyl-i-propyl sulfone, methyl-n-butyl sulfone, methyl-i-butyl sulfone, methyl-s-butyl sulfone, methyl-t-butyl sulfone, ethyl methyl sulfone, diethyl sulfone, ethyl-n-propyl sulfone, ethyl-i-propyl sulfone, ethyl-n-butyl sulfone, ethyl-i-butyl sulfone, ethyl-s-butyl sulfone, ethyl-t-butyl sulfone, di-n-propyl sulfone, di-i-propyl sulfone, n-propyl-n-butyl sulfone, n-butyl ethyl sulfone, i-butyl ethyl sulfone, s-butyl ethyl sulfone, and di-n-butyl sulfone, and
the alkyl sulfone derivative is ethyl phenyl sulfone.

6. An electrochemical device comprising a negative electrode including a magnesium-based material, wherein the electrochemical device comprises an electrolytic solution having a 2,2,6,6-tetramethylpiperidine-1-oxyl free radical or one of substances having the following structural formulas 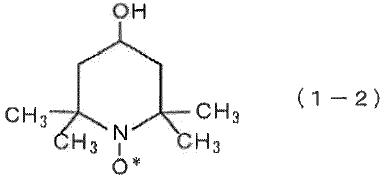 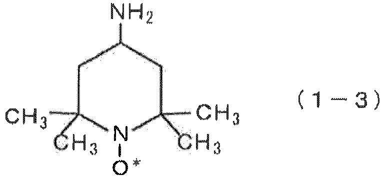 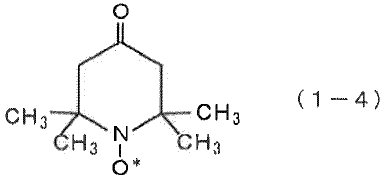 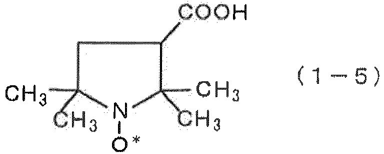 added to the electrolytic solution, wherein the electrolytic solution contains a sulfone and a magnesium salt dissolved in the sulfone.

7. The electrochemical device according to claim 6, comprising a positive electrode including a material containing sulfur.

8. The electrochemical device according to claim 6, wherein the magnesium salt includes MgXₙ, wherein n is 1 or 2, and X is a monovalent or divalent anion.

9. The electrochemical device according to claim 8, wherein the magnesium salt containing a halogen includes MgX₂, wherein X is Cl, Br, or I.

10. The electrochemical device according to claim 6, wherein the sulfone is an alkyl sulfone represented by R₁R₂SO₂, wherein R₁ and R₂ each represent an alkyl group, or an alkyl sulfone derivative, in particular, wherein
the alkyl sulfone is at least one alkyl sulfone selected from the group consisting of dimethyl sulfone, methyl ethyl sulfone, methyl-n-propyl sulfone, methyl-i-propyl sulfone, methyl-n-butyl sulfone, methyl-i-butyl sulfone, methyl-s-butyl sulfone, methyl-t-butyl sulfone, ethyl methyl sulfone, diethyl sulfone, ethyl-n-propyl sulfone, ethyl-i-propyl sulfone, ethyl-n-butyl sulfone, ethyl-i-butyl sulfone, ethyl-s-butyl sulfone, ethyl-t-butyl sulfone, di-n-propyl sulfone, di-i-propyl sulfone, n-propyl-n-butyl sulfone, n-butyl ethyl sulfone, i-butyl ethyl sulfone, s-butyl ethyl sulfone, and di-n-butylsulfone, and
the alkyl sulfone derivative is ethyl phenyl sulfone.

11. The electrochemical device according to any of claims 6 to 10, wherein the electrochemical device is a battery having an electrolyte layer constituted by the electrolytic solution according to any of claims 1 to 5.

## Patentansprüche

1. Elektrolytische Lösung für eine elektrochemische Vorrichtung mit einer negativen Elektrode, die ein Material auf Magnesiumbasis enthält, wobei ein freies 2,2,6,6-Tetramethylpiperidin-1-oxyl-Radikal oder eine der Substanzen mit den folgenden Strukturformeln zugesetzt wird 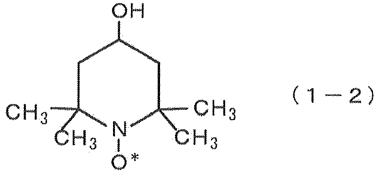 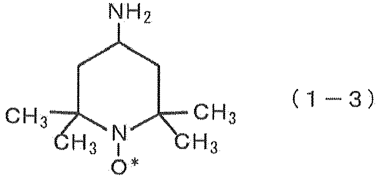 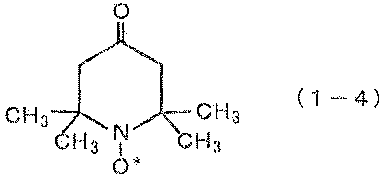 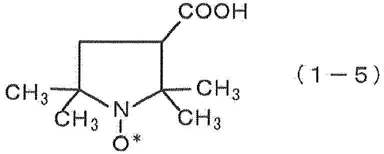 ;und wobei die elektrolytische Lösung ein Sulfon und ein in dem Sulfon gelöstes Magnesiumsalz umfasst.

2. Elektrolytische Lösung nach Anspruch 1, wobei die elektrochemische Vorrichtung eine positive Elektrode mit einem schwefelhaltigen Material enthält.

3. Elektrolytische Lösung nach Anspruch 1, wobei das Magnesiumsalz MgXₙ enthält, wobei n 1 oder 2 ist und X ein einwertiges oder zweiwertiges Anion ist.

4. Elektrolytische Lösung nach Anspruch 3, wobei das Magnesiumsalz, das ein Halogen enthält, MgX₂ einschließt, wobei X Cl, Br oder I ist.

5. Elektrolytische Lösung nach Anspruch 1, wobei das Sulfon ein Alkylsulfon ist, das durch R₁R₂SO₂ dargestellt wird, wobei R₁ und R₂ jeweils eine Alkylgruppe oder ein Alkylsulfon-Derivat darstellen, insbesondere, wobei
das Alkylsulfon mindestens ein Alkylsulfon ist, ausgewählt aus der Gruppe bestehend aus Dimethylsulfon, Methylethylsulfon, Methyl-n-propylsulfon, Methyl-i-propylsulfon, Methyl-n-butylsulfon, Methyl-i-butylsulfon, Methyl-s-butylsulfon, Methyl-t-butylsulfon, Ethylmethylsulfon, Diethylsulfon, Ethyl-n-propylsulfon, Ethyl-i-propylsulfon, Ethyl-n-butylsulfon, Ethyl-i-butylsulfon, Ethyl-s-butylsulfon, Ethyl-t-butylsulfon, Di-n-propylsulfon, Di-i-propylsulfon, n-Propyl-n-butylsulfon, n-Butylethylsulfon, i-Butylethylsulfon, s-Butylethylsulfon und Di-n-butylsulfon, und
das Alkylsulfon-Derivat Ethylphenylsulfon ist.

6. Elektrochemische Vorrichtung, aufweisend eine negative Elektrode, die ein Material auf Magnesiumbasis enthält, wobei die elektrochemische Vorrichtung eine elektrolytische Lösung aufweist, die ein freies 2,2,6,6-Tetramethylpiperidin-1-oxyl-Radikal besitzt oder eine der Substanzen mit den folgenden Strukturformeln 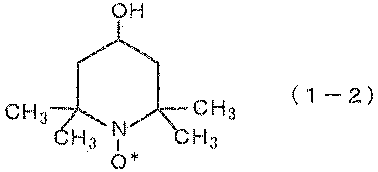 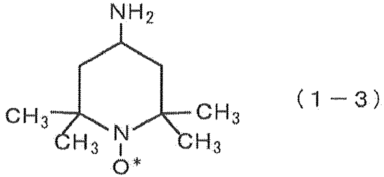 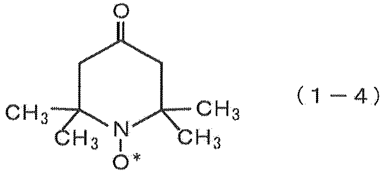 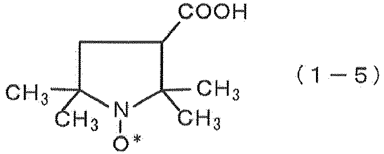 zu der elektrolytischen Lösung zugesetzt ist, wobei die elektrolytische Lösung ein Sulfon und ein in dem Sulfon gelöstes Magnesiumsalz enthält.

7. Elektrochemische Vorrichtung nach Anspruch 6, umfassend eine positive Elektrode, die ein schwefelhaltiges Material enthält.

8. Elektrochemische Vorrichtung nach Anspruch 6, wobei das Magnesiumsalz MgXₙ enthält, wobei n 1 oder 2 ist und X ein einwertiges oder zweiwertiges Anion ist.

9. Elektrochemische Vorrichtung nach Anspruch 8, wobei das Magnesiumsalz, das ein Halogen enthält, MgX₂ enthält, wobei X Cl, Br oder I ist.

10. Elektrochemische Vorrichtung nach Anspruch 6, wobei das Sulfon ein Alkylsulfon, dargestellt durch R₁R₂SO₂, wobei R₁ und R₂ jeweils eine Alkylgruppe darstellen, oder ein Alkylsulfon-Derivat ist, insbesondere, wobei
das Alkylsulfon mindestens ein Alkylsulfon ist, ausgewählt aus der Gruppe bestehend aus Dimethylsulfon, Methylethylsulfon, Methyl-n-propylsulfon, Methyl-i-propylsulfon, Methyl-n-butylsulfon, Methyl-i-butylsulfon, Methyl-s-butylsulfon, Methyl-t-butylsulfon, Ethylmethylsulfon, Diethylsulfon, Ethyl-n-propylsulfon, Ethyl-i-propylsulfon, Ethyl-n-butylsulfon, Ethyl-i-butylsulfon, Ethyl-s-butylsulfon, Ethyl-t-butylsulfon, Di-n-propylsulfon, Di-i-propylsulfon, n-Propyl-n-butylsulfon, n-Butylethylsulfon, i-Butylethylsulfon, s-Butylethylsulfon und Di-n-butylsulfon, und
das Alkylsulfon-Derivat Ethylphenylsulfon ist.

11. Elektrochemische Vorrichtung nach einem der Ansprüche 6 bis 10, wobei die elektrochemische Vorrichtung eine Batterie mit einer Elektrolytschicht ist, die aus der elektrolytischen Lösung nach einem der Ansprüche 1 bis 5 besteht.

## Revendications

1. Solution électrolytique pour un dispositif électrochimique comprenant une électrode négative comprenant un matériau à base de magnésium, dans laquelle un radical libre de type 2,2,6,6-tétraméthylpipéridine-1-oxyle ou l'une des substances possédant la formule structurale suivante est ajouté(e) 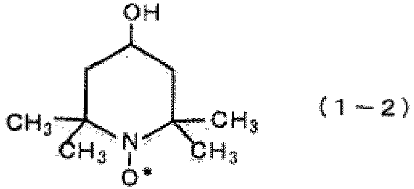 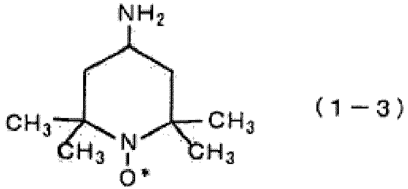 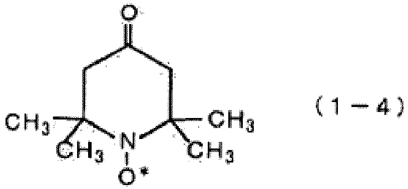 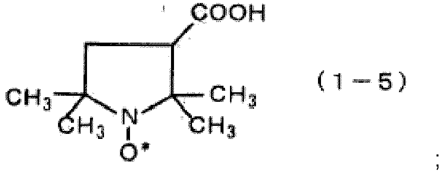 et la solution électrolytique comprenant une sulfone et un sel de magnésium dissous dans la sulfone.

2. Solution électrolytique selon la revendication 1, le dispositif électrochimique comprenant une électrode positive comprenant un matériau contenant du soufre.

3. Solution électrolytique selon la revendication 1, le sel de magnésium comprenant MgXₙ, n étant 1 ou 2, et X étant un anion monovalent ou divalent.

4. Solution électrolytique selon la revendication 3, le sel de magnésium contenant un halogénure comprenant MgX₂, X étant Cl, Br, ou I.

5. Solution électrolytique selon la revendication 1, la sulfone étant une alkylsulfone représentée par R₁R₂SO₂, R₁ et R₂ représentant chacun un groupe alkyle, ou un dérivé d'alkylsulfone,
en particulier,
l'alkylsulfone étant au moins une alkylsulfone choisie dans le groupe constitué par la diméthylsulfone, la méthyléthylsulfone, la méthyl-n-propylsulfone, la méthyl-i-propylsulfone, la méthyl-n-butylsulfone, la méthyl-i-butylsulfone, la méthyl-s-butylsulfone, la méthyl-t-butylsulfone, l'éthylméthylsulfone, la diéthylsulfone, l'éthyl-n-propylsulfone, l'éthyl-i-propylsulfone, l'éthyl-n-butylsulfone, l'éthyl-i-butylsulfone, l'éthyl-s-butylsulfone, l'éthyl-t-butylsulfone, la di-n-propylsulfone, la di-i-propylsulfone, la n-propyl-n-butylsulfone, la n-butyléthylsulfone, la i-butyléthylsulfone, la s-butyléthylsulfone, et la di-n-butylsulfone, et
le dérivé d'alkylsulfone étant l'éthylphénylsulfone.

6. Dispositif électrochimique comprenant une électrode négative comprenant un matériau à base de magnésium, le dispositif électrochimique comprenant une solution électrolytique possédant un radical libre de type 2,2,6,6-tétraméthylpipéridine-1-oxyle ou l'une des substances possédant la formule structurale suivante 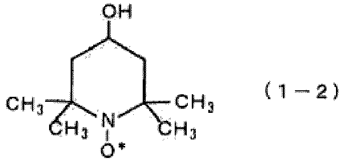 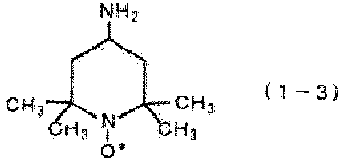 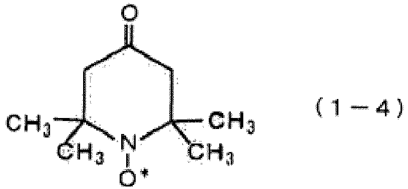 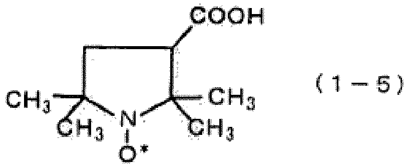 ajouté(e) à la solution électrolytique, la solution électrolytique contenant une sulfone et un sel de magnésium dissous dans la sulfone.

7. Dispositif électrochimique selon la revendication 6, comprenant une électrode positive comprenant un matériau contenant du soufre.

8. Dispositif électrochimique selon la revendication 6, le sel de magnésium comprenant MgXₙ, n étant 1 ou 2, et X étant un anion monovalent ou divalent.

9. Dispositif électrochimique selon la revendication 8, le sel de magnésium contenant un halogénure comprenant MgX₂, X étant Cl, Br, ou I.

10. Dispositif électrochimique selon la revendication 6, la sulfone étant une alkylsulfone représentée par R₁R₂SO₂, R₁ et R₂ représentant chacun un groupe alkyle, ou un dérivé d'alkylsulfone, en particulier,
l'alkylsulfone étant au moins une alkylsulfone choisie dans le groupe constitué par la diméthylsulfone, la méthyléthylsulfone, la méthyl-n-propylsulfone, la méthyl-i-propylsulfone, la méthyl-n-butylsulfone, la méthyl-i-butylsulfone, la méthyl-s-butylsulfone, la méthyl-t-butylsulfone, l'éthylméthylsulfone, la diéthylsulfone, l'éthyl-n-propylsulfone, l'éthyl-i-propylsulfone, l'éthyl-n-butylsulfone, l'éthyl-i-butylsulfone, l'éthyl-s-butylsulfone, l'éthyl-t-butylsulfone, la di-n-propylsulfone, la di-i-propylsulfone, la n-propyl-n-butylsulfone, la n-butyléthylsulfone, la i-butyléthylsulfone, la s-butyléthylsulfone, et la di-n-butylsulfone, et
le dérivé d'alkylsulfone étant l'éthylphénylsulfone.

11. Dispositif électrochimique selon l'une quelconque des revendications 6 à 10, le dispositif électrochimique étant une batterie possédant une couche d'électrolyte constituée par la solution électrolytique selon l'une quelconque des revendications 1 à 5.
